# EUROPEAN PATENT SPECIFICATION

(11) **EP 2 031 786 B1**
(45) Date of publication and mention of the grant of the patent: **06.06.2012**
(21) Application number: 08163440.4
(22) Date of filing: 01.09.2008
(51) Int. Cl.: H04L 5/00, H04L 27/26, H04L 1/00

(54) **Apparatus and method for transmitting and receiving an OFDM signal**
Vorrichtung und Verfahren zum Senden und Empfangen eines OFDM Signals
Appareil et procédé pour la transmission et la réception d'un signal OFDM

(30) Priority: 30.08.2007 US 969160 P; 04.09.2007 US 969944 P
(43) Date of publication of application: 04.03.2009
(60) Divisional application: 10166667.5
(73) Proprietor: LG Electronics Inc., Seoul 150-721 (KR)
(72) Inventor: Ko, Woo Suk, 137-724 Seoul (KR); Moon, Sang Chul, 137-724 Seoul (KR)
(74) Representative: Cabinet Plasseraud

(56) References cited:
- WO-A1-2007/083569
- US-A1- 2003 142 764
- US-A1- 2005 147 186
- "Digital Video Broadcasting (DVB); Second generation framing structure, channel coding and modulation systems for Broadcasting, Interactive Services, News Gathering and other broadband satellite applications European Broadcasting Union Union Européenne de Radio-Télévision EBUÜER; ETSI EN 302 307" ETSI STANDARDS, LIS, SOPHIA ANTIPOLIS CEDEX, FRANCE, vol. BC, no. V1.1.2, June 2006 (2006-06), XP014034070 ISSN: 0000-0001
- "Digital Video Broadcasting (DVB); Framing structure, channel coding and modulation for digital terrestrial television; ETSI EN 300 744", ETSI STANDARDS, LIS, SOPHIA ANTIPOLIS CEDEX, FRANCE, vol. BC, no. V1.5.1, 1 November 2004 (2004-11-01), XP014026912, ISSN: 0000-0001
- DVB ORGANIZATION: "T2_0200 CfT response Teracom TFS_concept.pdf", DVB, DIGITAL VIDEO BROADCASTING, C/O EBU - 17A ANCIENNE ROUTE - CH-1218 GRAND SACONNEX, GENEVA - SWITZERLAND, 4 June 2007 (2007-06-04), XP017817443,

## Description

The present invention relates to a method and apparatus for transmitting/ receiving a signal, and more particularly to a method and apparatus for increasing a data transfer rate (or data transfer efficiency).

With the increasing development of digital broadcasting technologies, a user is able to receive High Definition (HD) - moving images. With the increasing development of compression algorithm and high-performance hardware, the user may experience better environments in the future. A digital television (DTV) receives digital broadcast signals, and provides the user with a variety of additional or supplementary services along with video and audio data.

With the widespread of digital broadcasting technologies, the demand of high-quality video and audio services is rapidly increasing, and the size of user-desired data and the number of broadcast channels are also increasing. Document "DVB-T2 concept", BBC, Nokia, Teracom, publ. 4 June 2007, discloses an extension system of the OFDM-based, DVB-T2 standard, adding more flexibility and improved error correction.

That document discloses an apparatus for an OFDM system for receiving a broadcasting signal conveying a signal frame including physical layer pipes (PLPs) and a preamble including a first and a second pilot signals. The first pilot signal has information about a FFT size of the second pilot signal and the second pilot signal includes a service description table (SDT) and a network information table (NIT). The NIT includes a descriptor which is used in the Transport Stream (TS) loop of the NIT.

However, in the existing transmission frame structure, it is difficult to cope with the increase in the size of the data or the number of broadcasting channels. Accordingly, a requirement for a new signal transmitting/receiving technology in which channel bandwidth efficiency is higher than that of the existing signal transmitting/receiving method and cost necessary for configuring a signal transmitting/receiving network is low. Document US 2005/147186 discloses that an OFDM receiver operates symbol synchronization based on a guard interval.

Accordingly, the present invention is directed to an apparatus for transmitting/receiving a signal and a method for transmitting/receiving a signal that substantially obviate one or more problems due to limitations and disadvantages of the related art.

An object of the present invention devised to solve the problem lies on a method of transmitting/receiving a signal and an apparatus for tranemitting/receiving a signal, which are capable of using the existing signal transmitting/receiving network and improving data transmission efficiency.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to a first aspect of the present invention, there is provided an apparatus for an orthogonal frequency division multiplexing system as recited in claim 1.

In another aspect of the present invention, there is provided a related method as recited in claim 6.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 shows a signal frame for transmitting a service according to the present invention;

FIG. 2 shows a first pilot signal (P1) contained in the signal frame of FIG. 1 according to the present invention;

FIG. 3 shows a signaling window according to the present invention;

FIG. 4 is a block diagram illustrating an apparatus for transmitting a signal according to one embodiment of the present invention;

FIG. 5 is a block diagram illustrating an input processor 110 according to the present invention;

FIG. 6 is a block diagram illustrating a coding and modulation unit according to the present invention;

FIG. 7 is a block diagram illustrating a frame builder according to the present invention;

FIG. 8 is a block diagram illustrating a MIMO/MISO encoder according to the present invention;

FIG. 9 is a block diagram illustrating a modulator according to the present invention;

FIG. 10 is a block diagram illustrating an analog processor 160 according to the present invention;

FIG. 11 is a block diagram illustrating an apparatus for receiving a signal according to the present invention;

FIG. 12 is a block diagram illustrating a signal receiver according to the present invention;

FIG. 13 is a block diagram illustrating a demodulator according to the present invention;

FIG. 14 is a block diagram illustrating a MIMO/MISO decoder according to the present invention;

FIG. 15 is a block diagram illustrating a frame parser according to the present invention;

FIG. 16 is a block diagram illustrating a decoding demodulator according to the present invention;

FIG. 17 is a block diagram illustrating an output processor according to the present invention;

FIG. 18 is a block diagram illustrating an apparatus for transmitting a signal according to another embodiment of the present invention;

FIG. 19 is a block diagram illustrating an apparatus for receiving a signal according to another embodiment of the present invention;

FIG. 20 shows a NIT contained into service table information according to the present invention;

FIG. 21 is a conceptual diagram illustrating a method for acquiring signal frame information using the NIT according to the present invention;

FIG. 22 shows a delivery system descriptor contained in the NIT according to the present invention;

FIG. 23 shows a SDT according to the present invention;

FIG. 24 shows values of a constellation field contained in a delivery system descriptor according to the present invention;

FIG. 25 shows values of "guard_interval" field contained in a delivery system descriptor according to the present invention;

FIG. 26 shows values of "pilot_pattern" field contained in a delivery system descriptor according to the present invention;

FIG. 27 shows values of the "error_correction_mode" field contained in a delivery system descriptor according to the present invention;

FIG. 28 shows a descriptor capable of being contained in a delivery system descriptor according to the present invention;

FIG. 29 shows values of the "MIMO_indicator" field according to the present invention;

FIG. 30 is a block diagram illustrating an apparatus for receiving a signal according to yet another embodiment of the present invention; and

FIG. 31 is a flow chart illustrating a method for receiving a signal according to the present invention.

Reference will now be made in detail to the preferred embodiments of the present invention, examples of which are illustrated in the accompanying drawings. Wherever possible, the same reference numbers will be used throughout the drawings to refer to the same or like parts.

In the following description, the term "service" is indicative of either broadcast contents which can be transmitted by the signal transmitting/receiving apparatus, or content provision.

Prior to describing embodiments of the signal transmitting/receiving apparatus according to the present invention, a signal frame transmitted/received by the signal transmitting/receiving apparatus will hereinafter be described.

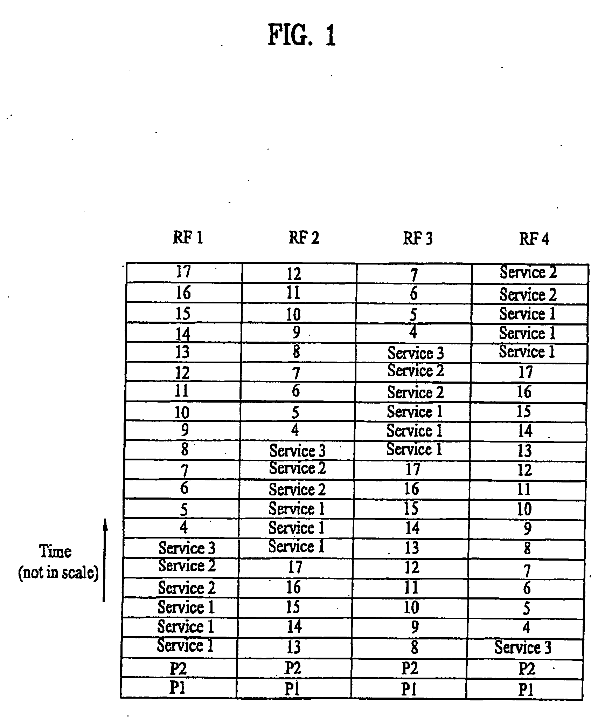

FIG. 1 shows a signal frame for transmitting a service according to the present invention.

The signal frame shown in FIG. 1 shows an exemplary signal frame for transmitting a broadcast service including audio/video (A/V) streams. In this case, a single service is multiplexed in time- and frequency- channels, and the multiplexed service is transmitted. The above-mentioned signal transmission scheme is called a time-frequency slicing (TFS) scheme. Compared with the conventional art in which a single service is transmitted to a single radio frequency (RF) band, the signal transmission apparatus according to the present invention transmits the signal service via several RF bands, such that it can acquire a statistical multiplexing gain capable of transmitting many more services. The signal transmission/reception apparatus transmits a single service over several RF channels, such that it can acquire a frequency diversity gain.

First to third services (Services 1∼3) are transmitted to four RF bands (RF1∼RF4). However, this number of RF bands and this number of services have been disclosed for only illustrative purposes, such that other numbers may also be used as necessary. Two reference signals (i.e., a first pilot signal (P1) and a second pilot signal (P2)) are located at the beginning part of the signal frame. For example, in the case of the RF1 band, the first pilot signal (P1) and the second pilot signal (P2) are located at the beginning part of the signal frame. The RF1 band includes three slots associated with the Service 1, two slots associated with the Service 2, and a single slot associated with the Service 3. Slots associated with other services may also be located in other slots (Slots 4∼17) located after the single slot associated with the Service 3.

The RF2 band includes a first pilot signal (P1), a second pilot signal (P2), and other slots 13∼17. In addition, the RF2 band includes three slots associated with the Service 1, two slots associated with the Service 2, and a single slot associated with the Service 3.

The Services 1∼3 are multiplexed, and are then transmitted to the RF3 and RF4 bands according to the time-frequency slicing (TFS) scheme. The modulation scheme for signal transmission may be based on an orthogonal frequency division multiplexing (OFDM) scheme.

In the signal frame, individual services are shifted to the RF bands and a time axis.

If signal frames equal to the above signal frame are successively arranged in time, a super-frame can be composed of several signal frames. A future extension frame may also be located among the several signal frames. If the future extension frame is located among the several signal frames, the super-frame may be terminated at the future extension frame.

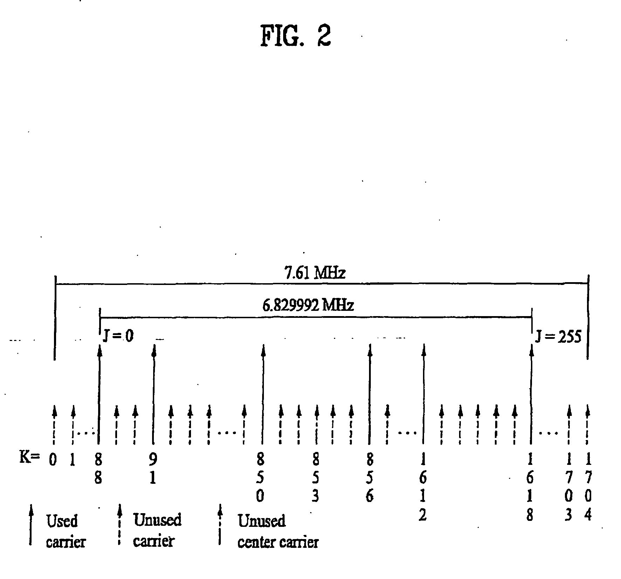

FIG. 2 shows a first pilot signal (P1) contained in the signal frame of FIG. 1 according to the present invention.

The first pilot signal P1 and the second pilot signal P2 are located at the beginning part of the signal frame. The first pilot signal P1 is modulated by a 2K FFT mode, and may be transmitted simultaneously while including a 1/4 guard interval. In FIG. 2, a band of 7.61Mhz of the first pilot signal P1 includes a band of 6.82992Mhz. The first pilot signal uses 256 carriers from among 1705 active carriers. A single active carrier is used for every 6 carriers on average. Data-carrier intervals may be irregularly arranged in the order of 3, 6, and 9. In FIG. 2, a solid line indicates the location of a used carrier, a thin dotted line indicates the location of an unused carrier, and a chain line indicates a center location of the unused carrier. In the first pilot signal, the used carrier can be symbol-mapped by a binary phase shift keying (BPSK), and a pseudo-random bit sequence (PRBS) can be modulated. The size of a FFT used for the second pilot signal can be indicated by several PRBSs.

The signal reception apparatus detects a structure of a pilot signal, and recognizes a time-frequency slicing (TFS) using the detected structure.
The signal reception apparatus acquires the FFT size of the second pilot signal, compensates for a coarse frequency offset of a reception signal, and acquires time synchronization.

A transmission type and basic transmission parameters can be established in the first pilot signal.

The second pilot signal P2 may be transmitted with a FFT size and a guard interval equal to those of the data symbol. In the second pilot signal, a single carrier is used as a pilot carrier at intervals of three carriers. The signal reception apparatus compensates for a fine frequency synchronization offset using the second pilot signal, and performs fine time synchronization. The second pilot signal transmits information of a first layer (L1) from among Open Systems Interconnection (OSI) layers. For example, the second pilot signal may include a physical parameter and frame construction information. The second pilot signal transmits a parameter value by which a receiver can access a Physical Layer Pipe (PLP) service stream.

L1 (Layer 1) information contained in the second pilot signal P2 is as follows.

The Layer-1 (L1) information includes a length indicator indicating the length of data including the L1 information, such that it can easily use the signaling channels of Layers 1 and 2 (L1 and L2). The Layer-1 (L1) information includes a frequency indicator, a guard-interval length, a maximum number of FEC (Forward Error Correction) blocks for each frame in association with individual physical channels, and the number of actual FEC blocks to be contained in the FEC block buffer associated with a current/previous frame in each physical channel. In this case, the frequency indicator indicates frequency information corresponding to the RF channel.

The Layer-1 (L1) information may include a variety of information in association with individual slots. For example, the Layer-1 (L1) information includes the number of frames associated with a service, a start address of a slot having the accuracy of an OFDM carrier contained in an OFDM symbol, a length of the slot, slots corresponding to the OFDM carrier, the number of bits padded in the last OFDM carrier, service modulation information, service mode rate information, and Multi-Input-Multi-Output (MIMO) scheme information.

The Layer-1 (L1) information may include a cell ID, a flag for service like notification message service(e.g., an emergency message), the number of current frames, and the number of additional bits for future use. In this case, the cell ID indicates a broadcast area transmitted by a broadcast transmitter.

The second pilot signal P2 is adapted to perform channel estimation for decoding a symbol contained in the P2 signal. The second pilot signal P2 can be used as an initial value for channel estimation for the next data symbol. The second pilot signal P2 may also transmit Layer-2 (L2) information. For example, the second pilot signal is able to describe information associated with the transmission service in Layer-2 (L2) information. The signal transmission apparatus decodes the second pilot signal, such that it can acquire service information contained in the time-frequency slicing (TFS) frame and can effectively perform the channel scanning. Meanwhile, this Layer-2 (L2) information may be included in a specific PLP of the TFS frame. According to another instance, L2 information can be included in a specific PLP, and the service description information also can be transmitted in the specific PLP.

For example, the second pilot signal may include two OFDM symbols of the 8k FFT mode. Generally, the second pilot signal may be any one of a single OFDM symbol of the 32K FFT mode, a single OFDM symbol of the 16k FFT mode, two OFDM symbols of the 8k FFT mode, four OFDM symbols of the 4k FFT mode, and eight OFDM symbols of the 2k FFT mode.

In other words, a single OFDM symbol having the size of a large FFT or several OFDM symbols, each of which has the size of a small FFT, may be contained in the second pilot signal P2, such that capacity capable of being transmitted to the pilot can be maintained.

If information to be transmitted to the second pilot signal exceeds capacity of the OFDM symbol of the second pilot signal, OFDM symbols after the second pilot signal can be further used. L1 (Layer1) and L2 (Layer2) information contained in the second pilot signal is error-correction-coded and is then interleaved, such that data recovery is carried out although an impulse noise occurs. As described the above, L2 information can also be included in a specific PLP conveying the service description information.

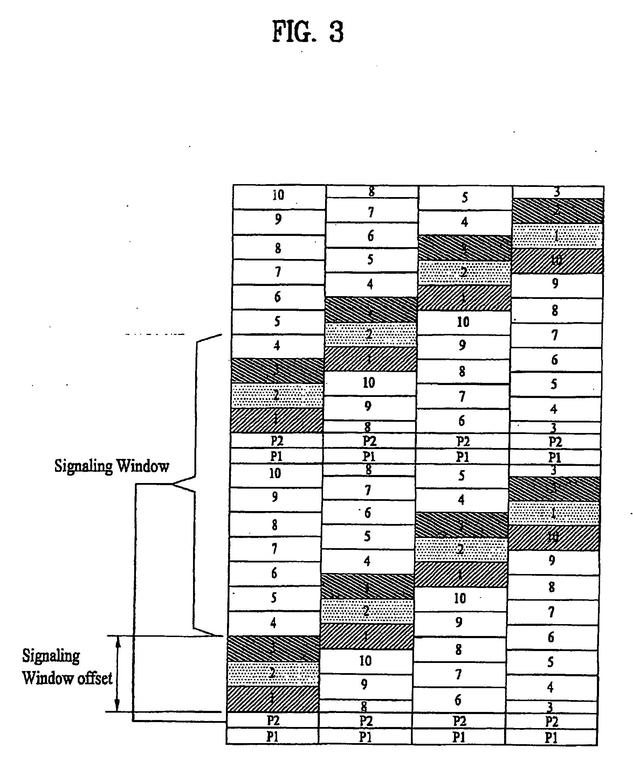

FIG. 3 shows a signaling window according to the present invention. The time-frequency slicing (TFS) frame shows an offset concept of the signaling information. Layer-1 (L1) information contained in the second pilot signal includes frame construction information and physical layer information required by the signal reception apparatus decoding the data symbol. Therefore, if information of the following data symbols located after the second pilot signal, is contained in the second pilot signal, and the resultant second pilot signal is transmitted, the signal reception apparatus may be unable to immediately decode the above following data symbols due to a decoding time of the second pilot signal.

Therefore, as shown in FIG. 3, the L1 information contained in the second pilot signal (P2) includes information of a single time-frequency slicing (TFS) frame size, and includes information contained in the signaling window at a location spaced apart from the second pilot signal by the signaling window offset.

In the meantime, in order to perform channel estimation of a data symbol constructing the service, the data symbol may include a scatter pilot and a continual pilot.

The signal transmission/reception system capable of transmitting/receiving signal frames shown in FIGS. 1∼3 will hereinafter be described. Individual services can be transmitted and received over several RF channels. A path for transmitting the individual services or a stream transmitted via this path is called a PLP.

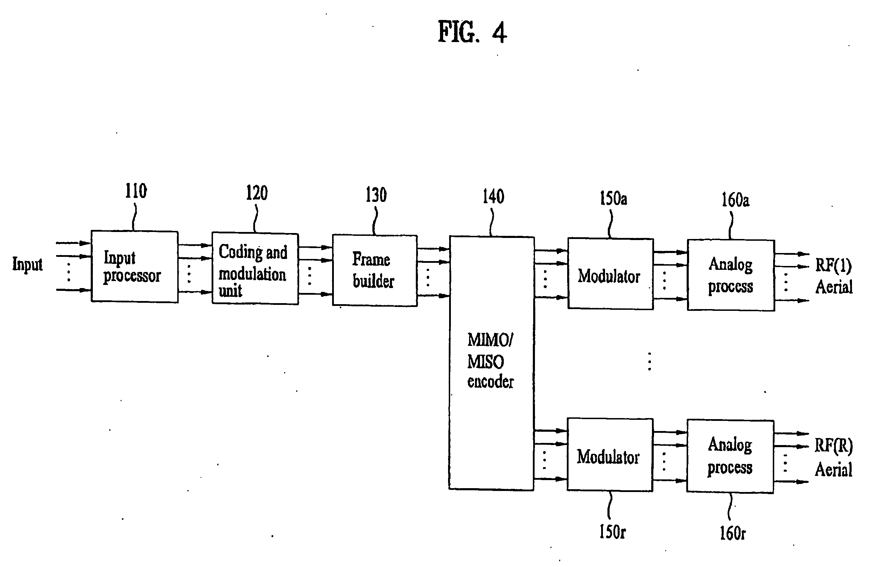

FIG. 4 is a block diagram illustrating an apparatus for transmitting a signal according to one embodiment of the present invention. Referring to FIG. 4, the signal transmission apparatus includes an input processor 110, a coding and modulation unit 120, a frame builder 130, a MIMO/MISO encoder 140, a plurality of modulators (150a, ..., 150r) of the MIMO/MISO encoder 140, and a plurality of analog processors (160a,...,160r).

The input processor 110 receives streams equipped with several services, generates P number of baseband frames (P is a natural number) which includes modulation- and coding- information corresponding to transmission paths of the individual services, and outputs the P number of baseband frames.

The coding and modulation unit 120 receives baseband frames from the input processor 110, performs the channel coding and interleaving on each of the baseband frames, and outputs the channel coding and interleaving result.

The frame builder 130 forms frames which transmit baseband frames contained in P number of PLPs to R number of RF channels (where R is a natural number), splits the formed frames, and outputs the split frames to paths corresponding to the R number of RF channels. Several services may be multiplexed in a single RF channel in time. The signal frames generated from the frame builder 140 may include a time-frequency slicing (TFS) structure in which the service is multiplexed in time- and frequency- domains.

The MIMO/MISO encoder 140 encodes signals to be transmitted to the R number of RF channels, and outputs the coded signals to paths corresponding to A number of antennas (where A is a natural number). The MIMO/MISO encoder 140 outputs the coded signal in which a single to be transmitted to a single RF channel is encoded to the A number of antennas, such that a signal is transmitted/received to/from a MIMO (Multi-Input-Multi-Output) or MISO (Multi-Input-Single-Output) structure.

The modulators (150a, ..., 150r) modulate frequency-domain signals entered via the path corresponding to each RF channel into time-domain signals. The modulators (150a, ..., 150r) modulate the input signals according to an orthogonal frequency division multiplexing (OFDM) scheme, and outputs the modulated signals.

The analog processors (160a, ..., 160r) converts the input signals into RF signals, such that the RF signals can be outputted to the RF channels.

The signal transmission apparatus according to this embodiment may include a predetermined number of modulators (150a,...150r) corresponding to the number of RF channels and a predetermined number of analog processors (160a,...,160r) corresponding to the number of RF channels. However, in the case of using the MIMO scheme, the number of analog processors must be equal to the product of R (i.e., the number of RF channels) and A (i.e., the number of antennas).

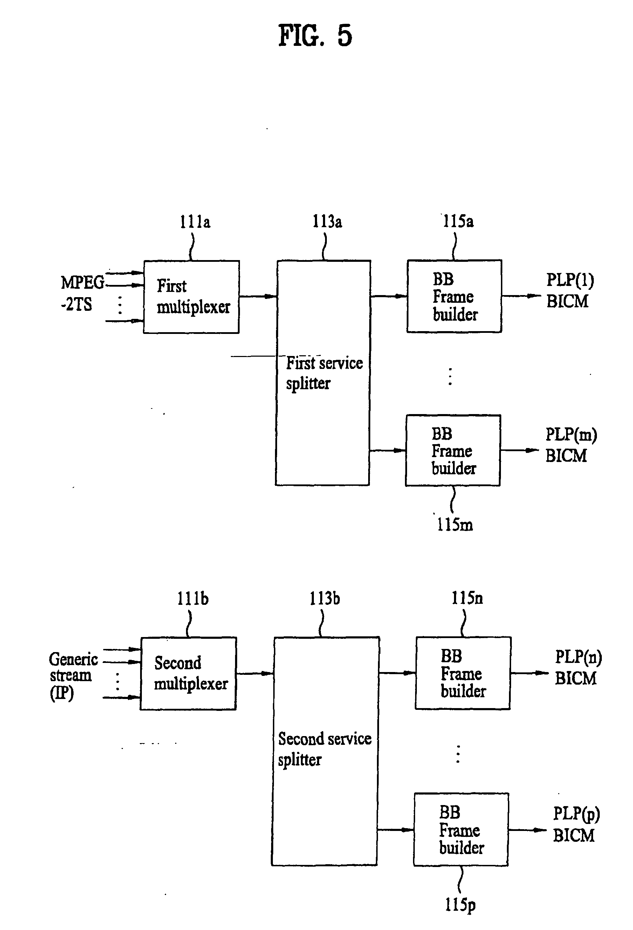

FIG. 5 is a block diagram illustrating an input processor 110 according to the present invention. Referring to FIG. 5, the input processor 110 includes the first stream multiplexer 111a, the first service splitter 113a, and a plurality of first baseband (BB) frame builders (115a, ..., 115m). The input processor 110 includes a second stream multiplexer 111b, a second service splitter 113b, and a plurality of second baseband (BB) frame builders (115n, ..., 115p).

For example, the first stream multiplexer 111a receives several MPEG-2 transport streams (TSs), multiplexes the received MPEG-2 TS streams, and outputs the multiplexed MPEG-2 TS streams. The first service splitter 113a receives the multiplexed streams, splits the input streams of individual services, and outputs the split streams. As described above, provided that the service transmitted via a physical-channel path is called a PLP, the first service splitter 113a splits the service to be transmitted to each PLP, and outputs the split service.

The first BB frame builders (115a, ..., 115m) build data contained in a service to be transmitted to each PLP in the form of a specific frame, and output the specific-frame-formatted data. The first BB frame builders (115a, ..., 115m) build a frame including a header and payload equipped with service data. The header of each frame may include mode information based on the modulation and encoding of the service data, and a counter value based on a clock rate of the modulator to synchronize input streams.

The second stream multiplexer 111b receives several streams, multiplexes input streams, and outputs the multiplexed streams. For example, the second stream multiplexer 111b may multiplex Internet Protocol (IP) streams instead of the MPEG-2 TS streams. These streams may be encapsulated by a generic stream encapsulation (GSE) scheme. The streams multiplexed by the second stream multiplexer 111b may be any one of streams. Therefore, the above-mentioned streams different from the MPEG-2 TS streams are called generic streams (GS streams).

The second service splitter 113b receives the multiplexed generic streams, splits the received generic streams according to individual services (i.e., PLP types), and outputs the split GS streams.

The second BB frame builders (115n, ..., 115p) build service data to be transmitted to individual PLPs in the form of a specific frame used as a signal processing unit, and output the resultant service data. The frame format built by the second BB frame builders (115n, ..., 115p) may be equal to that of the first BB frame builders (115a, ..., 115m) as necessary. If required, another embodiment may also be proposed. In another embodiment, the frame format built by the second BB frame builders (115n, ..., 115p) may be different from that of the first BB frame builders (115a, ..., 115m). The MPEG-2 TS header further includes a Packet Syncword which is not contained in the GS stream, resulting in the occurrence of different headers.

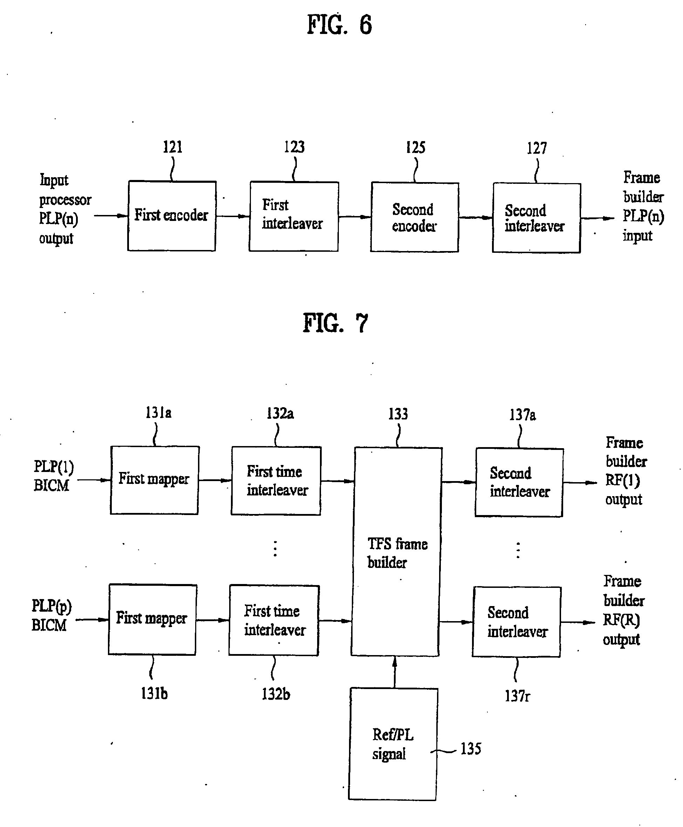

FIG. 6 is a block diagram illustrating a coding and modulation unit according to the present invention. The coding and modulation unit includes a first interleaver 123, a second encoder 125, and a second interleaver 127.

The first encoder 121 acts as an outer coder of the input baseband frame, and is able to perform the error correction encoding. The first encoder 121 performs the error correction encoding of the input baseband frame using a Bose- Chaudhuri-Hocquenghem (BCH) scheme. The first interleaver 123 performs interleaving of the encoded data, such that it prevents a burst error from being generated in a transmission signal. The first interleaver 123 may not be contained in the above-mentioned embodiment.

The second encoder 125 acts as an inner coder of either the output data of the first encoder 121 or the output data of the first interleaver 123, and is able to perform the error correction encoding. A low density parity bit (LDPC) scheme may be used as an error correction encoding scheme. The second interleaver 127 mixes the error-correction-encoded data generated from the second encoder 125, and outputs the mixed data. The first interleaver 123 and the second interleaver 127 are able to perform interleaving of data in units of a bit.

The coding and modulation unit 120 relates to a single PLP stream. The PLP stream is error-correction-encoded and modulated by the coding and modulation unit 120, and is then transmitted to the frame builder 130.

FIG. 7 is a block diagram illustrating a frame builder according to the present invention. Referring to FIG. 7, the frame builder 130 receives streams of several paths from the coding and modulation unit 120, and arranges the received streams in a single signal frame. For example, the frame builder may include a first mapper 131a and a first time interleaver 132a in a first path, and may include a second mapper 131b and a second time interleaver 132b in a second path. The number of input paths is equal to the number of PLPs for service transmission or the number of streams transmitted via each PLP.

The first mapper 131a performs mapping of data contained in the input stream according to the first symbol mapping scheme. For example, the first mapper 131a may perform mapping of the input data using a QAM scheme (e.g., 16 QAM, 64 QAM, and 256 QAM).

If the first mapper 131a performs mapping of the symbol, the input data may be mapped to several kinds of symbols according to several symbol mapping schemes. For example, the first mapper 131a classifies the input data into a baseband-frame unit and a baseband-frame sub-unit. Individual classified data may be hybrid-symbol-mapped by at least two QAM schemes (e.g., 16 QAM and 64 QAM). Therefore, data contained in a single service may be mapped to symbols based on different symbol mapping schemes in individual intervals.

The first time interleaver 132a receives a symbol sequence mapped by the first mapper 131a, and is able to perform the interleaving in a time domain. The first mapper 131a maps data, which is contained in the error-corrected frame unit received from the coding and modulation unit 120, into symbols. The first time interleaver 132a receives the symbol sequence mapped by the first mapper 131a, and interleaves the received symbol sequence in units of the error-corrected frame.

In this way, the p-th mapper 131p or the p-th time interleaver 132p receives service data to be transmitted to the p-th PLP, maps the service data into symbols according to the p-th symbol mapping scheme. The mapped symbols can be interleaved in a time domain. It should be noted that this symbol mapping scheme and this interleaving scheme are equal to those of the first time interleaver 132a and the first mapper 131a.

The symbol mapping scheme of the first mapper 131a may be equal to or different from that of the p-th mapper 131p. The first mapper 131a and the p-th mapper 131p are able to map input data to individual symbols using the same or different hybrid symbol mapping schemes.

Data of the time interleavers located at individual paths (i.e., service data interleaved by the first time interleaver 132a and service data to be transmitted to R number of RF channels by the p-th time interleaver 132p) is interleaved, such that the physical channel allows the above data to be interleaved over several RF channels.

In association with streams received in as many paths as the number of PLPs, the TFS frame builder 133 builds the TFS signal frame such as the above-mentioned signal frame, such that the service is time-shifted according to RF channels. The TFS frame builder 133 splits service data received in any one of paths, and outputs the service data split into data of the R number of RF bands according to a signal scheduling scheme.

The TFS frame builder 133 receives the first pilot signal and the second pilot signal from the signaling information unit (denoted by Ref/PL signal) 137, arranges the first and second pilot signals in the signal frame, and inserts the signaling signal (at least one of L1 and L2) of the above-mentioned physical layer in the second pilot signal. In this case, the first and second pilot signals are used as the beginning signals of the signal frame contained in each RF channel from among the TFS signal frame received from the signaling information unit (Ref/PL signal) 137. As shown in FIG. 2, the first pilot signal may include a transmission type and basic transmission parameters, and the second pilot signal may include a physical parameter and frame construction information. Also, the second pilot signal includes a L1 (Layer 1) signaling signal and a L2 (Layer 2) signaling signal. Network information (hereinafter illustrated as NIT) including the RF construction information is transmitted via the L1 signaling signal. Service description information (hereinafter illustrated as SDT) for providing service information is transmitted via the L2 signaling signal. Meanwhile, the L2 signaling signal including the service description information can also be transmitted in the specific PLP.

The R number of frequency interleavers (137a, ..., 137r) interleave service data, to be transmitted to corresponding RF channels of the TFS signal frame, in a frequency domain. The frequency interleavers (137a, ..., 137r) can interleave the service data at a level of data cells contained in an OFDM symbol.

Therefore, service data to be transmitted to each RF channel in the TFS signal frame is frequency-selective-fading-processed, such that it may not be lost in a specific frequency domain.

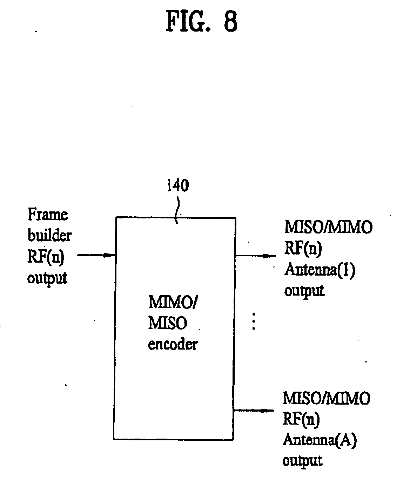

FIG. 8 is a block diagram illustrating a MIMO/MISO encoder according to the present invention. Referring to FIG. 8, the MIMO/MISO encoder encodes the input data using the MIMO/MISO encoding scheme, and outputs the encoded data to several paths. If a signal reception end receives the signal transmitted to the several paths from one or more paths, it is able to acquire a gain (also called a diversity gain, a payload gain, or a multiplexing gain).

The MIMO/MISO encoder 140 encodes service data of each path generated from the frame builder 130, and outputs the encoded data to the A number of paths corresponding to the number of output antennas.

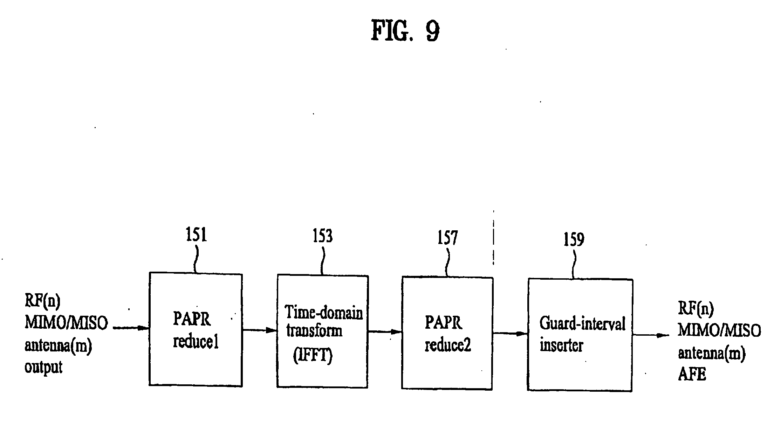

FIG. 9 is a block diagram illustrating a modulator according to the present invention. Referring to FIG. 9, the modulator includes a first power controller (PAPR Reduce1) 151, a time-domain transform unit (IFFT) 153, a second power controller (PAPR Reduce2) 157, and a guard-interval inserter 159.

The first power controller 151 reduces a PAPR (Peak-to-Average Power Ratio) of data transmitted to the R number of signal paths in the frequency domain.

The time-domain transform (IFFT) unit 153 converts the received frequency-domain signals into time-domain signals. For example, the frequency-domain signals may be converted into the time-domain signals according to the IFFT algorithm. Therefore, the frequency-domain data may be modulated according to the OFDM scheme.

The second power controller (PAPR Reduce2) 157 reduces a PAPR (Peak-to-Average Power Ratio) of channel data transmitted to the R number of signal paths in the time domain. In this case, a tone reservation scheme, and an active constellation extension (ACE) scheme for extending symbol constellation can be used.

The guard-interval inserter 159 inserts the guard interval into the output OFDM symbol, and outputs the inserted result. As described above, the above-mentioned embodiment can be carried out in each signal of the R number of paths.

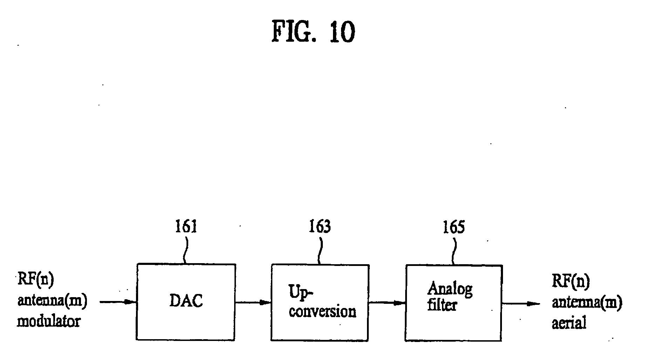

FIG. 10 is a block diagram illustrating an analog processor 160 according to the present invention. Referring to FIG. 10, the analog processor 160 includes a digital-to-analog converter (DAC) 161, an up-conversion unit 163, and an analog filter 165.

The DAC 161 converts the input data into an analog signal, and outputs the analog signal. The up-conversion unit 163 converts a frequency domain of the analog signal into an RF area. The analog filter 165 filters the RF-area signal, and outputs the filtered RF signal.

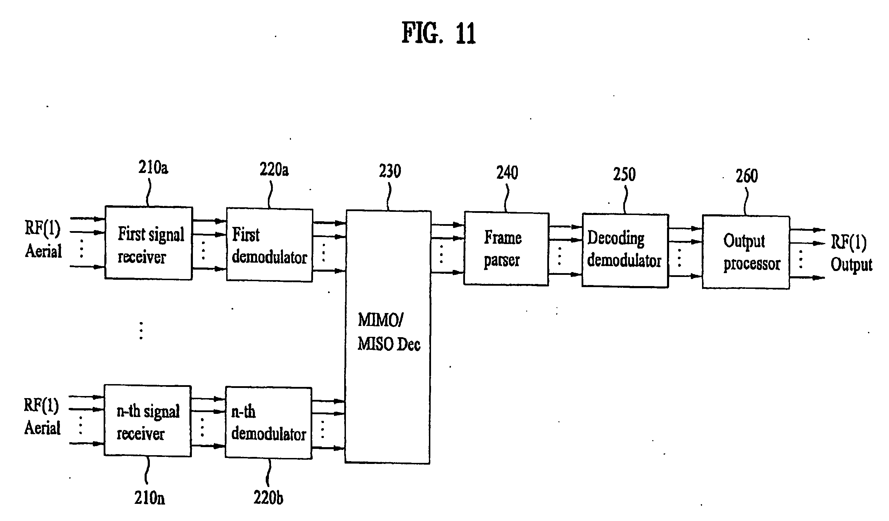

FIG. 11 is a block diagram illustrating an apparatus for receiving a signal according to the present invention. Referring to FIG. 11, the signal reception apparatus includes a first signal receiver 210a, an n-th signal receiver 210n, a first demodulator 220a, an n-th demodulator 220n, a MIMO/MISO decoder 230, a frame parser 240, and a decoding demodulator 250, and an output processor 260.

In the case of a reception signal according to the TFS signal frame structure, several services are multiplexed to R channels, and are then time-shifted, such that the time-shifted result is transmitted.

The receiver may include at least one signal receiver for receiving a service transmitted over at least one RF channel. The TFS signal frame transmitted to the R (where R is a natural number) number of RF channels can be transmitted to a multi-path via the A number of antennas. The A antennas have been used for the R RF channels, such that a total number of antennas is R x A.

The first signal receiver 210a is able to receive service data transmitted via at least one path from among overall service data transmitted via several RF channels. For example, the first signal receiver 210a can receive the transmission signal processed by the MIMO/MISO scheme via several paths.

The first signal receiver 210a and the n-th signal receiver 210n can receive several service data units transmitted over n number of RF channels from among several RF channels, as a single PLP. Namely, this embodiment shows the signal reception apparatus capable of simultaneously receiving data of the R number of RF channels. Therefore, if this embodiment receives a single RF channel, only the first receiver 210a is needed.

The first demodulator 220a and the n-th demodulator 220n demodulate signals received in the first and n-th signal receivers 210a and 210n according to the OFDM scheme, and output the demodulated signals.

The MIMO/MISO decoder 230 decodes service data received via several transmission paths according to the MIMO/MISO decoding scheme, and outputs the decoded service data to a single transmission path. If the number R of services transmitted over several transmission paths are received, the MIMO/MISO decoder 230 can output single PLP service data contained in each of R services corresponding to the number of R channels. If P number of services are transmitted via the R number of RF channels, and signals of individual RF channels are received via the A number of antennas, the receiver decodes the P number of services using a total of (R x A) reception antennas.

The frame parser 240 parses the TFS signal frame including several services, and outputs the parsed service data.

The decoding demodulator 250 performs the error correction decoding on the service data contained in the parsed frame, demaps the decoded symbol data into bit data, and outputs the demapping-processed result.

The output processor 260 decodes a stream including the demapped bit data, and outputs the decoded stream.

In the above-mentioned description, each of the frame parser 240, and the decoding demodulator 250, and the output processor 260 receives several service data units as many as the number of PLPs, and performs signal processing on the received service data.

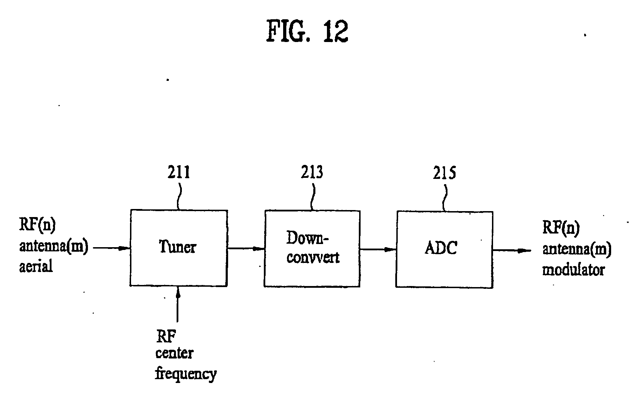

FIG. 12 is a block diagram illustrating a signal receiver according to the present invention. Referring to FIG. 12, the signal receiver may include a tuner 211, a down-converter 213, and an analog-to-digital converter (ADC) 215.

The tuner 211 performs hopping of some RF channels capable of transmitting user-selected services in all RF channels, and outputs the hopping result. The tuner 211 performs hopping of RF channels contained in the TFS signal frame according to an input RF center frequency, and at the same time tunes corresponding frequency signals, such that it outputs the tuned signals. If a signal is transmitted to A number of multi-paths, the tuner 211 performs the tuning to a corresponding RF channel, and receives reception signals via the A number of antennas.

The down converter 213 performs down conversion of the RF frequency of the signal tuned by the tuner 211, and outputs the down-conversion result. The ADC 215 converts an analog signal into a digital signal.

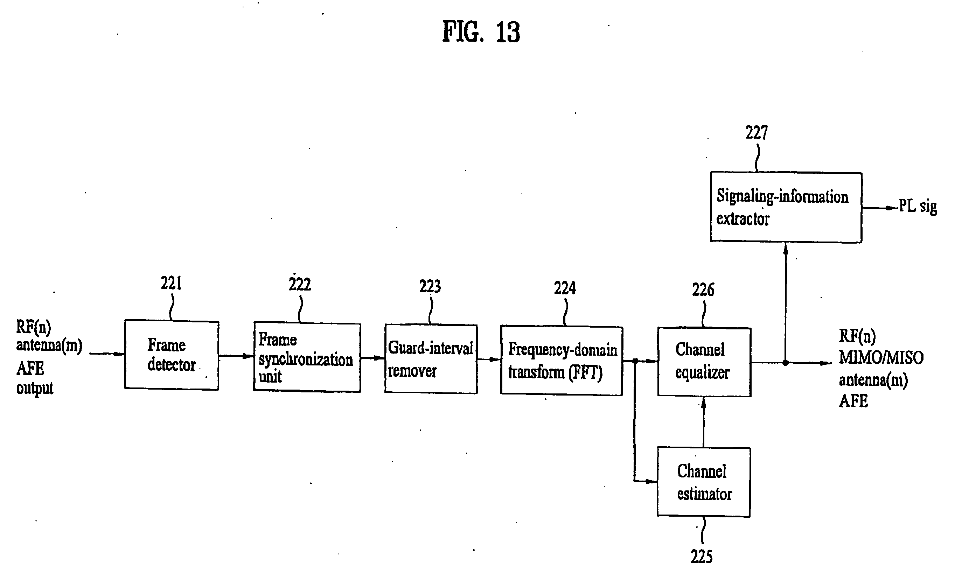

FIG. 13 is a block diagram illustrating a demodulator according to the present invention. Referring to FIG. 13, the demodulator includes a frame detector 221, a frame synchronization unit 222, a guard-interval remover 223, a frequency-domain transform unit (FFT) 224, a channel estimator 225, a channel equalizer 226, and a signaling-information extractor 227.

If the demodulator acquires service data transmitted to a single PLP stream, the following signal demodulation will be carried out. A detailed description thereof will hereinafter be described.

The frame detector 221 identifies a delivery system of a reception signal. For example, the frame detector 221 determines whether the reception signal is a DVB-TS signal or not. And, the frame detector 221 may also determine whether a reception signal is a TFS signal frame or not. The frame synchronization unit 222 acquires time- and frequency- domain synchronization of the TFS signal frame.

The guide interval controller 223 removes a guard interval located between OFDM symbols from the time domain. The frequency-domain converter (FFT) 224 converts a reception signal into a frequency-domain signal using the FFT algorithm, such that it acquires frequency-domain symbol data.

The channel estimator 225 performs channel estimation of a reception channel using a pilot symbol contained in symbol data of the frequency domain. The channel equalizer 226 performs channel equalization of reception data using channel information estimated by the channel estimator 225.

The signaling information extractor 227 can extract the signaling information of a physical layer established in the first and second pilot signals contained in channel-equalized reception data.

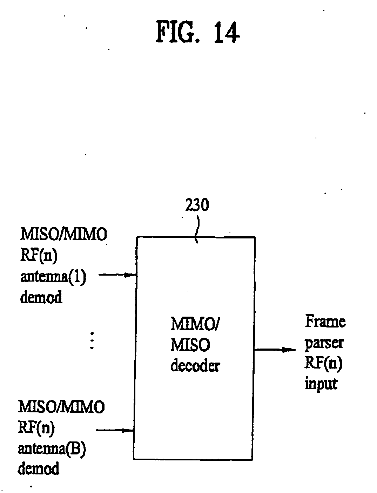

FIG. 14 is a block diagram illustrating a MIMO/MISO decoder according to the present invention. The signal receiver and the demodulator are designed to process a signal received in a single path. If the signal receiver and the demodulator receive PLP service data providing a single service via several paths of several antennas, and demodulate the PLP service data, the MIMO/MIMO decoder 230 outputs the signal received in several paths as service data transmitted to a single PLP. Therefore, the MIMO/MISO decoder 230 can acquire a diversity gain and a multiplexing gain from service data received in a corresponding PLP.

The MIMO/MISO decoder 230 receives a multi-path transmission signal from several antennas, and is able to decode a signal using a MIMO scheme capable of recovering each reception signal in the form of a single signal. Otherwise, the MIMO/MISO decoder 230 is able to recover a signal using a MIMO scheme which receives the multi-path transmission signal from a single antenna and recovers the received multi-path transmission signal.

Therefore, if the signal is transmitted via the R number of RF channels (where R is a natural number), the MIMO/MISO decoder 230 can decode signals received via the A number of antennas of individual RF channels. If the A value is equal to "1", the signals can be decoded by the MISO scheme. If the A value is higher than "1", the signals can be decoded by the MIMO scheme.

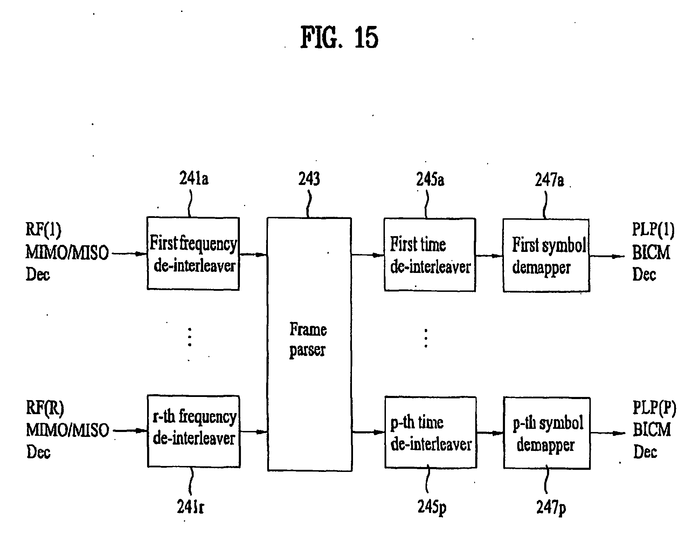

FIG. 15 is a block diagram illustrating a frame parser according to the present invention. Referring to FIG. 15, the frame parser includes a first frequency de-interleaver 241a, a r-th frequency deinterleaver 241r, a frame parser 243, a first time deinterleaver 245a, a p-th time de-interleaver 245p, a first symbol demapper 247a, and a p-th symbol demapper. The value of "r" can be decided by the number of RF channels, and the value of "p" can be decided by the number of streams transmitting PLP service data generated from the frame parser 243.

Therefore, if p number of services are transmitted to p number of PLP streams over R number of RF channels, the the frame parser includes the r number of frequency de-interleavers, the p number of time de-interleavers, and the p number of symbol demappers.

In association with a first RF channel, the first frequency interleaver 241a performs deinterleaving of frequency-domain input data, and outputs the de-interleaving result.

The frame parser 243 parses the TFS signal frame transmitted to several RF channels using scheduling information of the TFS signal frame, and parses PLP service data contained in the slot of a specific RF channel including a desired service. The frame parser 243 parses the TFS signal frame to receive specific service data distributed to several RF channels according to the TFS signal frame structure, and outputs first-path PLP service data.

The first time de-interleaver 245a performs de-interleaving of the parsed first-path PLP service data in the time domain. The first symbol demapper 247a determines service data mapped to the symbol to be bit data, such that it can output a PLP stream associated with the first-path PLP service data.

Provided that symbol data is converted into bit data, and each symbol data includes symbols based on the hybrid symbol-mapping scheme, the p number of symbol demappers, each of which includes the first symbol demapper, can determine the symbol data to be bit data using different symbol-demapping schemes in individual intervals of the input symbol data.

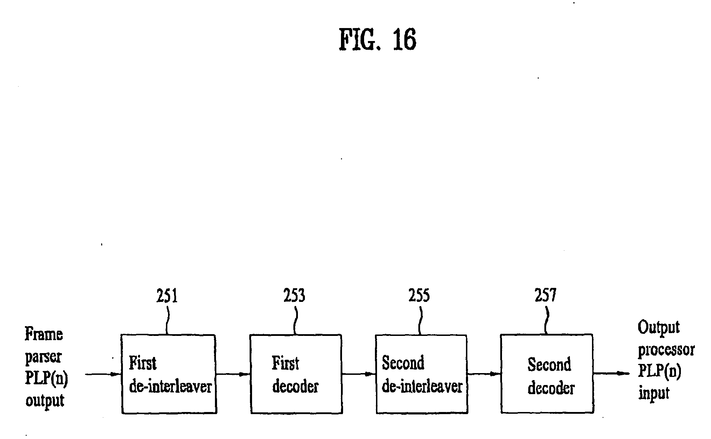

FIG. 16 is a block diagram illustrating a decoding demodulator according to the present invention. Referring to FIG. 16, the decoding demodulator may include several function blocks corresponding to the coding and modulation unit. In this embodiment, the decoding demodulator of FIG. 16 may include a first deinterleaver 251, a first decoder 253, a second deinterleaver 255, and a second decoder 257. The second de-interleaver 255 can be selectively contained in the decoding demodulator.

The first de-interleaver 251 acts as an inner de-interleaver, and is able to perform de-interleaving of the p-th PLP stream generated from the frame parser.

The first decoder 253 acts as an inner decoder, can perform error correction of the deinterleaved data, and can use an error correction decoding algorithm based on the LDPC scheme.

The second de-interleaver 255 acts as an outer interleaver, and can perform de-interleaving of the error- correction-decoded data.

The second decoder 257 acts as an outer decoder. Data de-interleaved by the second deinterleaver 255 or error-corrected by the first decoder 253 is error-corrected again, such that the second decoder 257 outputs the re- error-corrected data. The second decoder 257 decodes data using the error correction decoding algorithm based on the BCH scheme, such that it outputs the decoded data.

The first de-interleaver 251 and the second de-interleaver 255 are able to convert the burst error generated in data contained in the PLP stream into a random error. The first decoder 253 and the second decoder 257 can correct errors contained in data.

The decoding demodulator shows operation processes associated with a single PLP stream. If the p number of streams exist, the p number of decoding demodulators are needed, or the decoding demodulator may repeatedly decode input data p times.

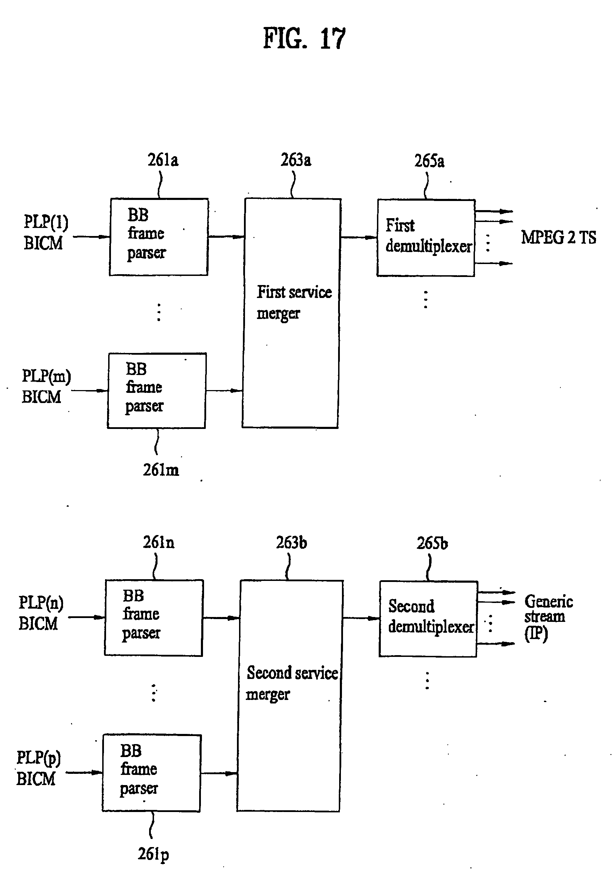

FIG. 17 is a block diagram illustrating an output processor according to the present invention. Referring to FIG. 17, the output processor may include p number of baseband (BB) frame parsers (251a, ..., 261p), a first service merger 263a, a second service merger 263b, a first demultiplexer 265a, and a second demultiplexer 265b.

The BB frame parsers (261a, ..., 261p) remove BB frame headers from the first to p-th PLP streams according to the received PLP paths, and output the removed result. This embodiment shows that service data is transmitted to at least two streams. A first stream is an MPEG-2 TS stream, and a second stream is a GS stream.

The first service merger 263a calculates the sum of service data contained in payload of at least one BB frame, such that it outputs the sum of service data as a single service stream. The first demultiplexer 255a may demultiplex the service stream, and output the demultiplexed result.

In this way, the second service merger 263b calculates the sum of service data contained in payload of at least one BB frame, such that it can output another service stream. The second demultiplexer 255b may demultiplex the GS-format service stream, and output the demultiplexed service stream.

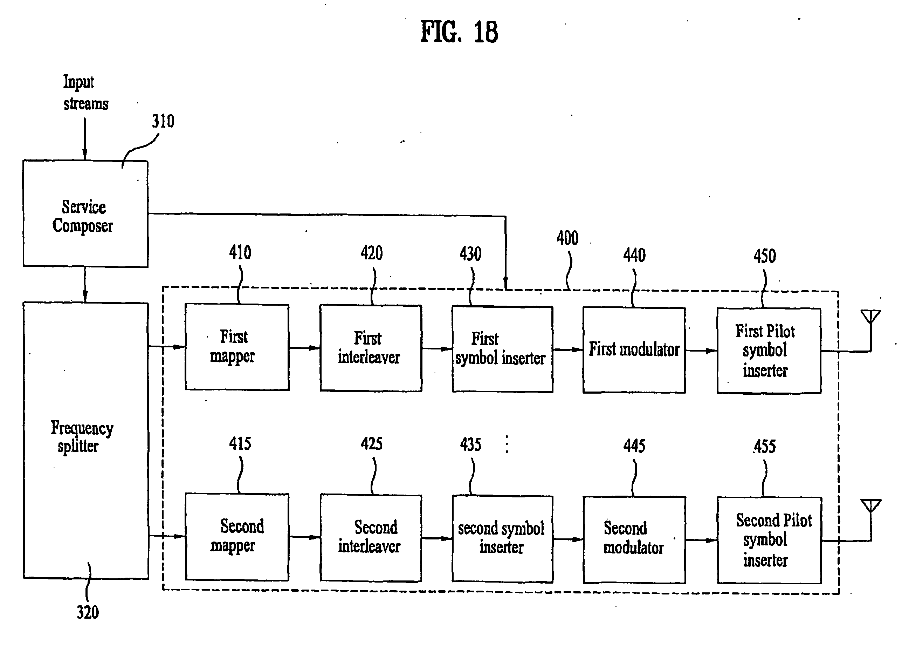

FIG. 18 is a block diagram illustrating an apparatus for transmitting a signal according to another embodiment of the present invention. Referring to FIG. 18, the signal transmission apparatus includes a service composer 310, a frequency splitter 320, and a transmitter 400. The transmitter 400 encodes or modulates a signal including a service stream to be transmitted to each RF band.

The service composer 310 receives several service streams, multiplexes several service streams to be transmitted to individual RF channels, and outputs the multiplexed service streams. The service composer 310 outputs scheduling information, such that it controls the transmitter 400 using the scheduling information. By this scheduling information, the service composer 310 modulates several service frames to be transmitted to several RF channels by the transmitter 400, and transmits the modulated service frames.

The frequency splitter 320 receives a service stream to be transmitted to each RF band, and splits each service stream into several sub-streams, such that the individual RF frequency bands can be allocated to the sub-streams.

The transmitter 400 processes the service streams to be transmitted to individual frequency bands, and outputs the processed resultant streams. For example, in association with a specific service stream to be transmitted to the first RF channel, the first mapper 410 maps the input service stream data into symbols. The first interleaver 420 interleaves the mapped symbols to prevent the burst error.

The first symbol inserter 430 can insert a signal frame equipped with a pilot signal (e.g., a scatter pilot signal or a continual pilot signal) into the modulated signal.

The first modulator 440 modulates the data interleaved by the signal modulation scheme. For example, the first modulator 440 can modulate signals using the OFDM scheme.

The first pilot symbol inserter 450 inserts the first pilot signal and the second pilot signal in the signal frame, and is able to transmit the TFS signal frame.

Service stream data transmitted to the second RF channel is transmitted to the TFS signal frame via several blocks 415, 425, 435, 445, and 455 of different paths shown in the transmitter of FIG. 18.

The number of signal processing paths transmitted from the transmitter 400 may be equal to the number of RF channels contained in the TFS signal frame.

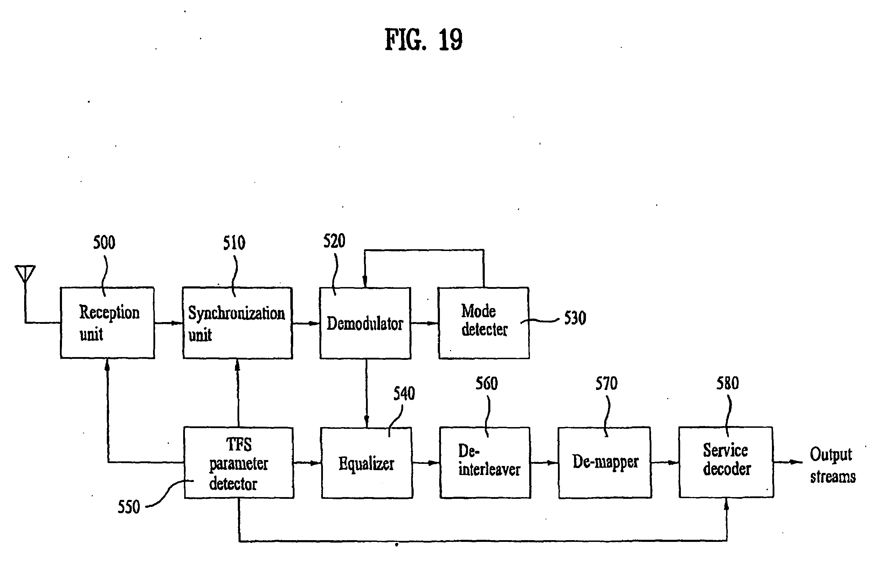

FIG. 19 is a block diagram illustrating an apparatus for receiving a signal according to another embodiment of the present invention. Referring to FIG. 19, the signal reception apparatus may include a reception unit 510, a synchronization unit 520, a mode detector 530, an equalizer 540, a parameter detector 550, a de-interleaver 560, a demapper 570, and a service decoder 580.

The reception unit 500 is able to receive signals of a first RF channel selected by a user from among the signal frame. If the signal frame includes several RF channels, the reception unit 500 performs hopping of the several RF channels, and at the same time can receive a signal including the selected service frame.

The synchronization unit 510 acquires synchronization of a reception signal, and outputs the synchronized reception signal. The demodulator 520 is able to demodulate the synchronization-acquired signal. The mode detector 530 can acquire a FFT mode (e.g., 2k, 4k, 8k FFT operation length) of the second pilot signal using the first pilot signal of the signal frame.

The demodulator 520 demodulates the reception signal under the FFT mode of the second pilot signal. The equalizer 540 performs channel estimation of the reception signal, and outputs the channel-estimation resultant signal. The de-interleaver 560 de-interleaves the channel-equalized reception signal. The demapper 570 demaps the interleaved symbol using the symbol demapping scheme corresponding to the transmission-signal symbol mapping scheme (e.g., QAM).

The parameter detector 550 acquires physical parameter information (e.g., Layer-1 (L1) information) contained in the second pilot signal from the output signal of the equalizer 540, and transmits the acquired physical parameter information (for example, the network information of the NIT) to the reception unit 500 and the synchronization unit 510. The reception unit 500 is able to change the RF channel to another channel using network information detected by the parameter detector 550.

The parameter detector 550 outputs service-associated information (for example, the service description information of the SDT), service decider 580 decodes service data of the reception signal according to the service-associated information from the parameter detector 550, and outputs the decoded service data.

Next, specific information capable of describing broadcast signals while the signal frame of FIG. 1 or 3 is transmitted/received will hereinafter be described in detail. Under the condition that the above-mentioned signal frame is transmitted/received, if the specific information describes the broadcast signals, is transmitted on the basis of a section, and is configured in the form of a single table, the above-mentioned specific information is called service table information. For example, PSI/SI information may be used as the above service table information.

The exemplary signal frame is designed to enable several RF channel groups to transmit several services. Network Information Table (NIT) capable of describing network information such as a physical channel may be contained in each RF channel, and may be then transmitted and received. For example, the NIT contained in a first RF channel (RF channel 1) describes channel information of four RF channels (RF channels 1∼4) constructing the signal frame. The signal reception apparatus can acquire information associated with three services (Services 1∼3) from the service table information.

If the signal reception apparatus tunes the first RF channel (RF channel 1) from among the signal frame, the first pilot signal P1 and the second pilot signal P2 can acquire corresponding information without performing the descrambling or de-interleaving. The NIT may be contained in the first signaling signal L1, such that the resultant NIT contained in the first signaling signal L1 is transmitted. In this case, the NIT may include network-associated information or TS (Transport Stream) information constructing the network.

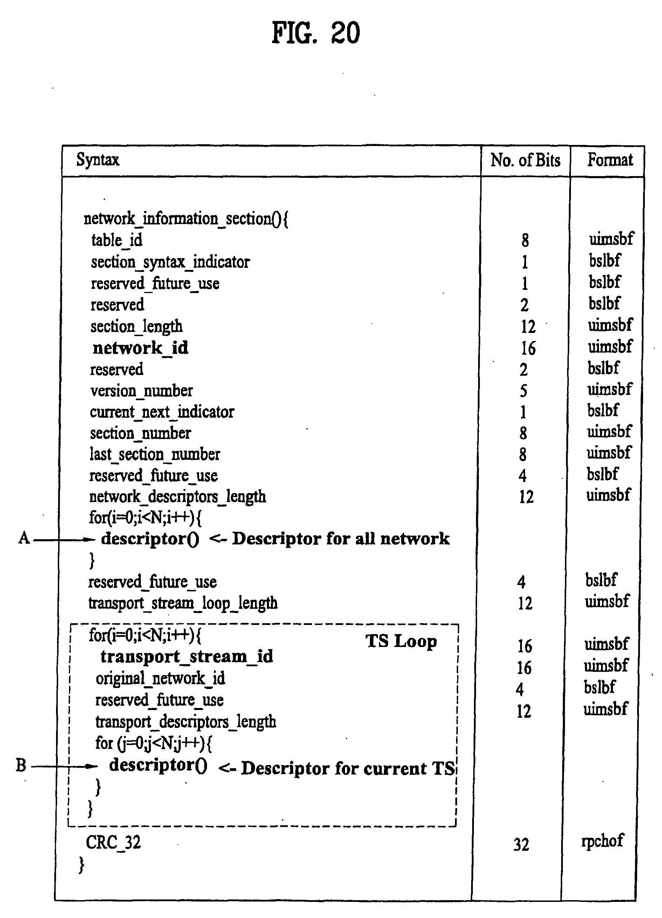

FIG. 20 shows a NIT contained into service table information according to the present invention.

Referring to FIG. 20, the "table_id" field indicates an identifier capable of identifying the NIT. The "section_syntax_indicator" field may be set to the value of "1", and may have an MPEG long-form type. The "reserved_future_use" field or the "reserved" field is used as a reserved area. For example, "reserved_future_use" field may be set to the value of "1", and the "reserved" field may be set to the value of "11". The "section_length" field indicates the length of a section. The "network_id" field indicates an identifier for identifying a delivery system transmitting the service stream. For example, identification information of a broadcast transmitter may be contained in the "network_id" field. The "version_number" field indicates a version number of either a section or a sub-table. The "current_next_indicator" field indicates whether the following information is applied to a current section. The "section_number" field indicates a serial number of the section. The "last_section_number" field indicates the last-section number.

The "reserved_future_use" field indicates a reserved area. The "network_descriptors_length" field indicates the length of a descriptor A. Also, the "network_descriptors_length" field may include the descriptor A equipped with specific information capable of describing all networks.

The "transport_stream_loop_length" field located after the "reserved_future_use" field indicates the length of a following TS (Transport Stream) loop.

In FIG. 20, a dotted line indicates a loop including TS-describing information. The "transport_stream_id" field indicates a TS (Transport Stream) identifier capable of distinguishing a TS stream of a delivery system transmitting a current signal from another TS stream of another delivery system.

The "original_network_id" field is indicative of an identifier capable of identifying a network identifier of an original delivery system. A descriptor B which describes a corresponding TS associated with a TS identifier, and a field indicating the length of the B descriptor are located after the "reserved_future_use" field.

Therefore, the NIT includes a descriptor describing all networks, and a TS (Transport Stream) loop describing transport streams of individual networks. Also, the NIT may include another descriptor describing a current transport stream (TS) from among transport streams.

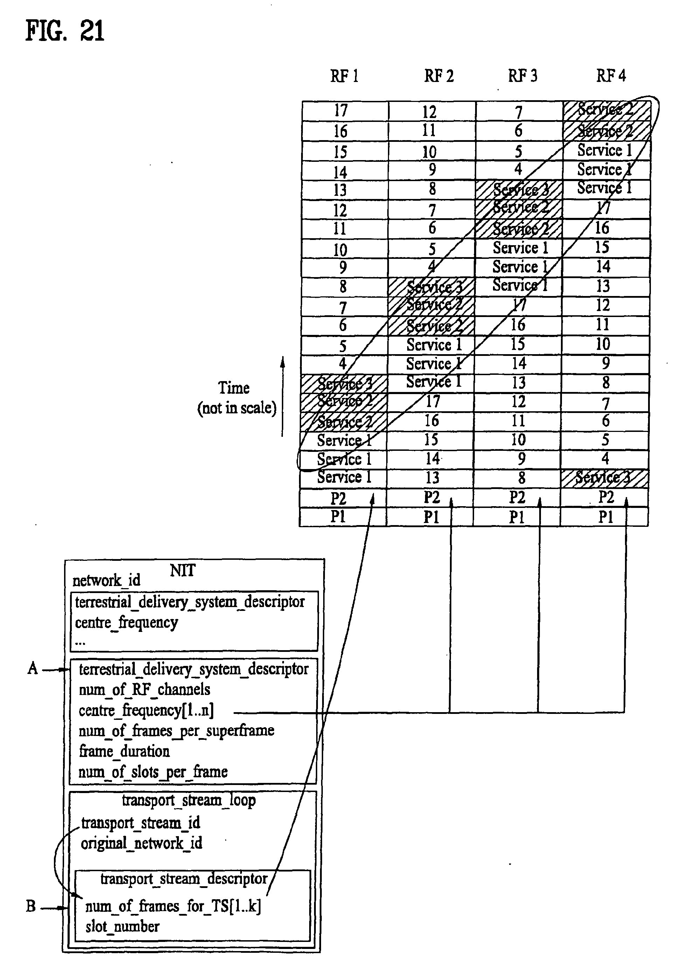

FIG. 21 is a conceptual diagram illustrating a method for acquiring signal frame information using the NIT according to the present invention. As described above, the NIT may be contained in the first signaling signal (L1), and a descriptor of the NIT may describe not only information of a corresponding RF channel but also information of another RF channel contained in the signal frame. The NIT may be contained in the first signaling signal L1. The NIT may include network-associated information of a signal transmitted by a current delivery system. The NIT may include specific information capable of acquiring a desired service from the above signal frame in the above-mentioned descriptor A.

The descriptor A may include not only physical frequency information transmitting the above-mentioned signal frame, but also information associated with the signal frame. In the following description, the aforementioned descriptor A will hereinafter be referred to as "delivery_system_descriptor".

The "transport_stream_loop" field of the delivery system descriptor may include a TS identifier for transmitting a service contained in the signal frame, and a descriptor B describing the TS identifier. This descriptor B is called a transport stream (TS) descriptor.

The descriptor contained in the NIT which acquires the service from the above-mentioned signal frame will hereinafter be described.

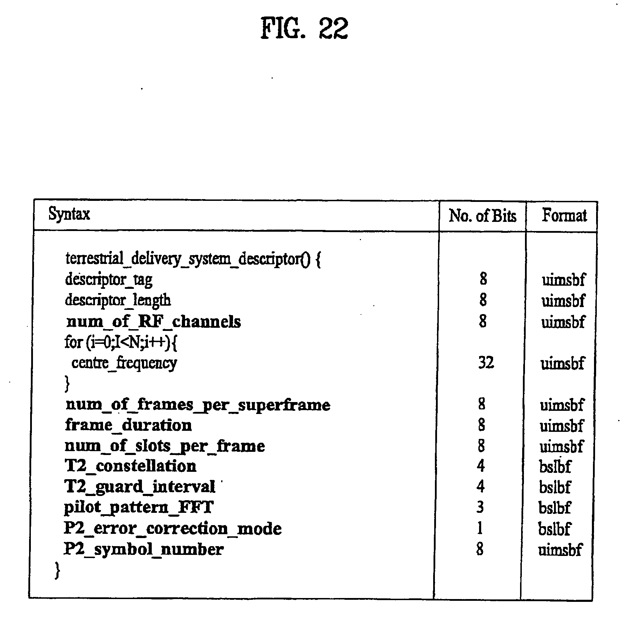

FIG. 22 shows a delivery system descriptor contained in the NIT according to the present invention.

The "descriptor_tag" field indicates an identifier of the delivery system descriptor. The "descriptor_length" field indicates the length of the delivery system descriptor.

The "num_of_RF_channels" field indicates the number of RF channels contained in the TFS signal frame transmitted by the delivery system. The "centre_frequency" field indicates a center frequency of the RF channel contained in the TFS signal frame.

If a super-frame is composed of a plurality of the above signal frames, the "num_of_frames_per_superframe" field indicates the number of signal frames contained in the super-frame. For example, the "num_of_frames_per_superframe" field may be set to a fixed value, or may be unchanged according to table versions.

The "frame_duration" field indicates a time length of a single signal frame. For example, the "frame_duration" field may be set to a fixed value, or may be unchanged according to table versions.

The "num_of_slots_per_frame" field indicates the number of slots contained in a single RF channel from among the above signal frame. For example, the signal frame of FIG. 1 includes 20 slots, and 17 empty slots from among the 20 slots are transmitted. The "num_of_slots__per_frame" field may be variable according to table versions.

The "constellation" field indicates a constellation used for the symbol mapping. For example, 256QAM, 1024QAM, and hybrid symbol-mapping scheme information may be set to the "constellation" field. A detailed description of the "constellation" field will be described later.

The "guard_interval" field indicates a guard interval, and a detailed description thereof will hereinafter be described.

The "pilot_pattern_FFT" field is able to use various scatter pilot patterns and continual pilot signals in the above-mentioned signal frame. The "pilot_pattern_FFT" field can indicate each of the scatter pilot signals and the continual pilot signals.

The "RF_mode_indicator" field indicates whether the RF mode is used as a TF or FF (Fixed-Frequency) mode. In case of the TF mode, the "time_frequency_slicing" parameter is used. In case of the FF mode, the "time_frequency_slicing" parameter is not in use.

The "P2_error_correnction_mode" field indicates an error correction mode used for the exemplary signal frame. For example, in the case of using the LDPC error correction algorithm, the short mode and the long mode may be established in the "P2_error_correnction_mode" field. A detailed description thereof will hereinafter be described.

In association with the first signaling signal L1 equipped with RF-channel construction information and the second signaling signal L2 equipped with service construction information, the "P2_symbol_number" field indicates the size of the second signaling signal L2, i.e., the number of symbols contained in the second signaling signal L2. If a table version is changed to another, the value of the "P2_symbol_number" field may also be changed to another value. Next, information associated with the "P2_symbol_number" field will hereinafter be described in detail.

The second signaling signal may include a Service Description Table (SDT) describing the service. The SDT is able to describe the service contained in a single TS. For example, another service contained in another RF channel which is not contained in the above-mentioned signal frame may also be described in the SDT.

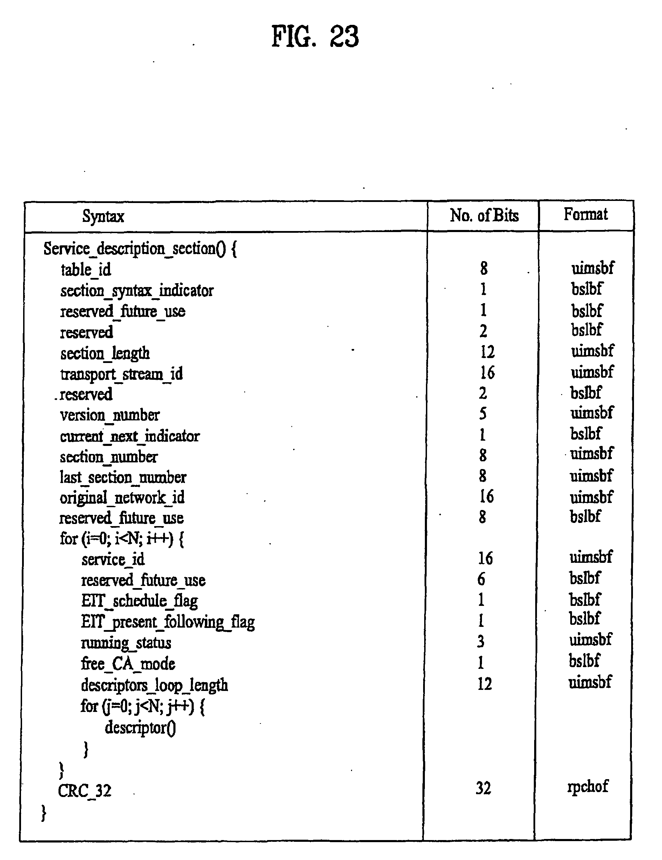

FIG. 23 shows the SDT according to the present invention. The SDT contained in the second signaling signal will hereinafter be described.

Referring to FIG. 23, the "table_id" field is a table identifier capable of identifying the SDT table.

The "section_syntax_indicator" field indicates the section based on the MPEG long form, and may have the value of "1" as necessary.

The "reserved_future_use" field is a reserved area for future use. The "reserved" field is also used as the reserved area. The "section_length" field indicates a section length. The "transport_stream_id" field indicates an identifier of another TS stream transmitted by the delivery system. The "version_number" field located after the "reserved" field used as the reserved area indicates a version number of the section.

The "current_next_indicator" field indicates whether information contained in the following service description table (SDT) can be currently used or not. The "section_number" field indicates the section number. The "last_section_number" field indicates the last-section number.

The "original_network_id" field indicates a network identifier of an original delivery system. The "reserved_future_use" field is located after the "original_network_id" field.

The "service_id" field indicates an identifier of a service to be described. The "service_id" field indicates an identifier of the service received via the PLP stream.

The "EIT_schedule_flag" field indicates whether an Event Information Table (EIT) is contained in a current transport stream (TS). The "EIT_present_following_flag" field indicates whether the "EIT_present_following" information associated with the service is contained in the current TS.

The "running_status" field indicates a service status. The "running_status" field indicates whether a current status is a running status, indicates how many seconds are needed to start operation, and indicates whether a current status is a halt status. The "free_OA_mode" field indicates whether component streams of the service have been scrambled.

The "desciptor_loop_length" field indicates the length of a following descriptor. The "CRC_32" field indicates CRC data.

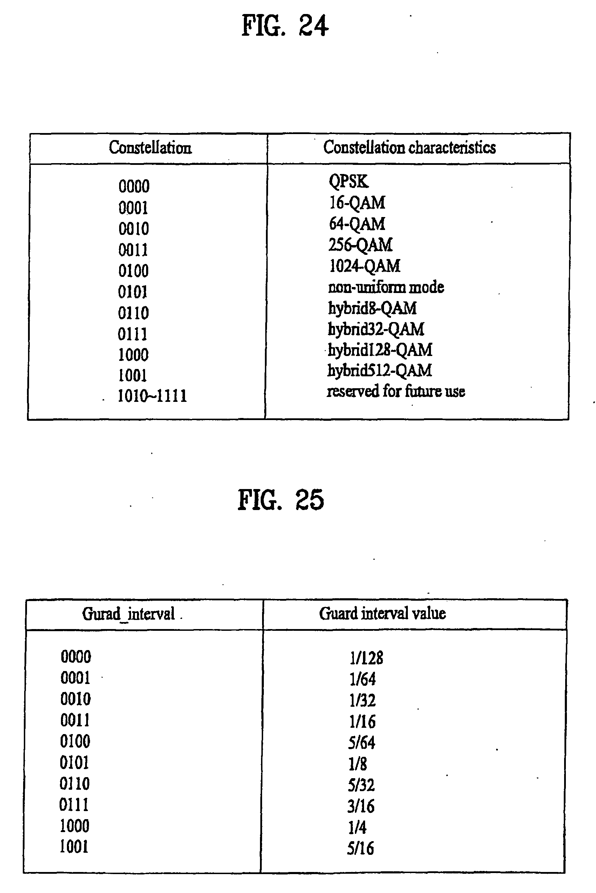

FIG. 24 shows values of the constellation field contained in the delivery system descriptor according to the present invention. Referring to FIG. 24, 0000, 0001, 0010, 0011, ..., 1001 may be indicative of QPSK, 16QAM, 64QAM, 256QAM, 1024QAM, non-uniform mode and hybrid symbol mapping schemes according to individual symbol mapping schemes.

FIG. 25 shows values of the "guard_interval" field contained in the delivery system descriptor according to the present invention. FIG. 25 shows a guard-interval length. For example, the guard interval may be any one of 1/128, 1/64, 1/32, 1/16, 5/64, 1/8, 5/32, 3/16, 1/4, and 5/16.

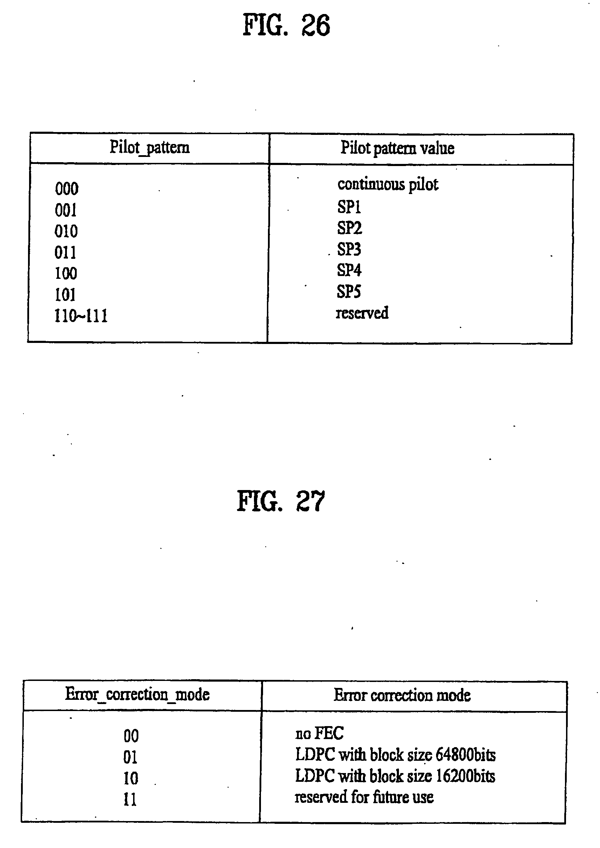

FIG. 26 shows values of the "pilot_pattern" field contained in the delivery system descriptor according to the present invention. For example, the "pilot_pattern" field may indicate the continual pilot using the pilot-pattern value, or may indicate any one of first to fifth patterns SP1∼SP5 according to patterns equipped with the scatter pilot symbol contained in the OFDM symbol. In FIG. 26, the "pilot_pattern" field is able to identify any one of fifth pilot symbol patterns, and several scatter pilot patterns may exist.

FIG. 27 shows the "error_correction_mode" values contained in the delivery system descriptor according to the present invention. The "error_correction_mode" field describes the error correction encoding mode used for the transmission signal. For example, the "error_correction_mode" field indicates "no FEC" status in which the error correction code is not in use, or indicates that a LDPC with the block size of 64800 bits or a LDPC with the block size of 12800 bits is used.

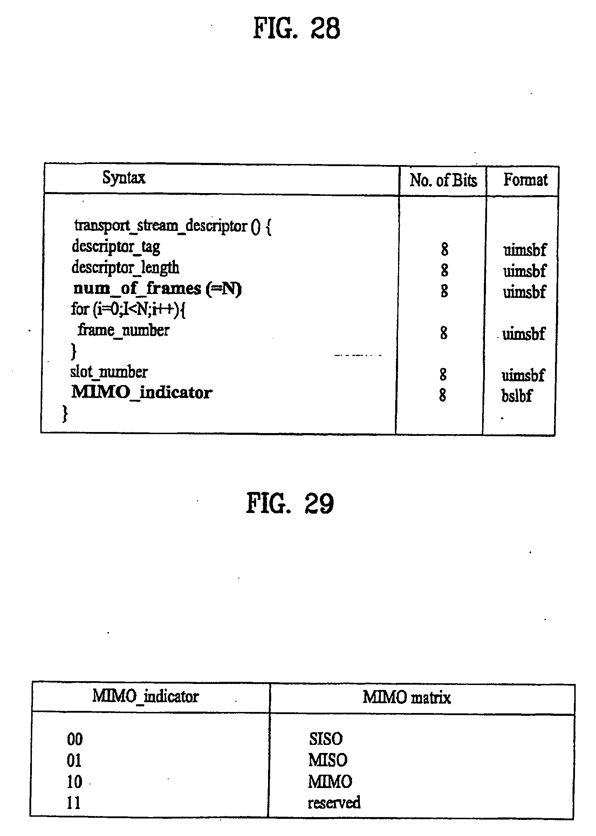

FIG. 28 shows a descriptor capable of being contained in a delivery system descriptor according to the present invention. The descriptor of FIG. 28 is called "transport_stream_descriptor". The descriptor can describe information of the signal frame associated with the transport stream (TS) transmitted by the delivery system.

The "descriptor_tag" field indicates an identifier of the TS (Transport Stream) descriptor. The "descriptor_length" field indicates a length of the TS descriptor.

The transport stream (TS) can be transmitted to slots contained in a predetermined signal frame contained in the super-frame. Therefore, if a signal frame contained in the super-frame and a slot-slicing (or sub-slicing) of the corresponding TS are recognized, the service can be acquired.

The "num_of_frame" field indicates a total number of signal frames contained in the super-frame. The "frame_number" field indicates the number of frames, each of which includes a corresponding TS (Transport Stream). The "slot_number" field indicates the number of a slot transmitting the TS in a corresponding signal frame.

The "MIMO_indicator" field indicates whether the TS stream is transmitted/received according to the MIMO scheme, or indicates which one of MIMO modes is used for the TS transmission.

FIG. 29 shows values of the "MIMO_indicator" field according to the present invention. Transmission structure information of a signal transmitted to a multi-path may be denoted by the "MIMO_indicator" values. For example, if the "MIMO_indicator" value is set to "00", the value of "00" indicates the SISO scheme. If the "MIMO_indicator" value is set to "01", the value of "01" indicates the 2x2 (i.e., the number of transmission paths x the number of reception paths) MIMO scheme. If the "MIMO_indicator" value is set to "10", the value of "01" indicates the 4x4 (i.e., the number of transmission paths x the number of reception paths) MIMO scheme.

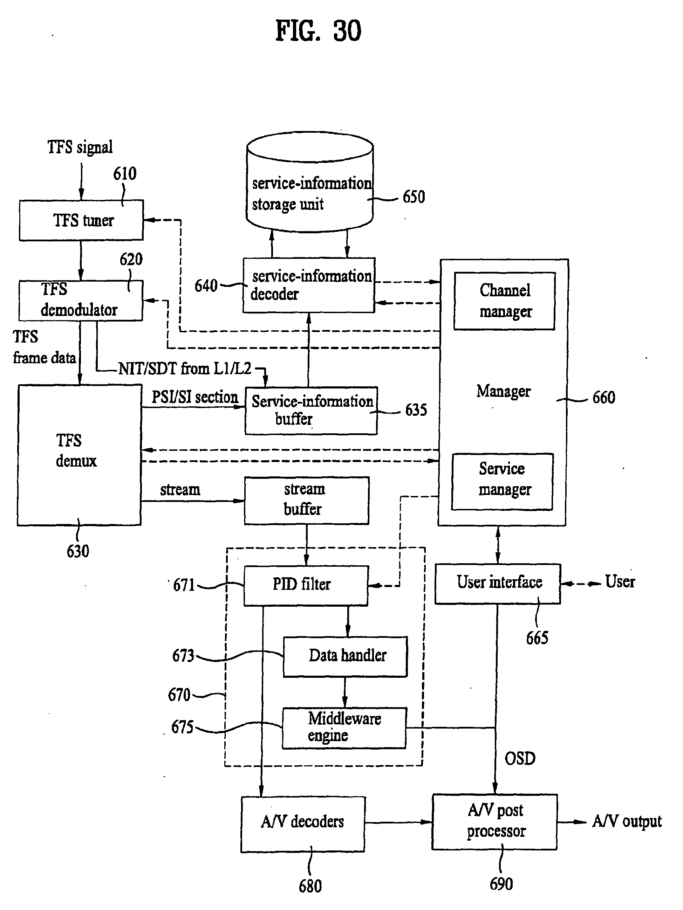

FIG. 30 is a block diagram illustrating an apparatus for receiving a signal according to yet another embodiment of the present invention. In more detail, FIG. 30 illustrates the signal reception apparatus capable of receiving the above-mentioned signal frame using the above service table information. Referring to FIG. 30, the signal reception apparatus includes a tuner 610, a demodulator 620, a demultiplexer 630, a service-information buffer 635, a stream buffer 637, a service-information decoder 640, a service-information storage unit 650, a manager 660, an interface unit 665, a data processor 670, a decoder 680, and a post-processor 690.

The tuner 610 receives the above-mentioned signal frame, and is able to tune the RF channel contained in the received signal frame. The tuner 610 performs hopping of RF channels contained in the signal frame to receive the PLP stream, and at the same time can receive signals contained in the RF channel.

The demodulator 620 can identify the TFS signal frame using the first signaling signal L1 contained in the signal frame. The demodulator 620 can acquire RF-channel information contained in the signal frame using the network information contained in the first signaling signal.

The network information contained in the first signaling signal L1 may include a variety of information, for example, the number of RF channels contained in the signal frame, the number of TFS signal frames contained in the super-frame, the frame duration, a constellation used for the symbol mapping, a guard interval, a pilot pattern, an error correction mode, etc.

The demodulator 620 can acquire the service description information from the second signaling signal L2. The service description information includes service location information from among a corresponding RF channel.

If the demodulator 620 demodulates the signal frame, the PLP stream contained in several RF channels may be outputted.

The demulitplexer 630 demultiplexes the service table information contained in the PLP stream and the service data stream. The service table information is stored in the service-information buffer 635, and the service data stream is stored in the stream buffer 637.

The interface unit 660 receives a control signal from a user, and outputs the received control signal to the manager 660 and the post-processor 690.

The manager 660 receives user-selected channel information and user-selected service information from the interface unit 665, and is able to control the above-mentioned function blocks to carry out the received information.

The manager 660 may include a channel manager for channel selection and a service manager for controlling services provided from the channel. If the service is selected, the channel manager can control the tuner 610 and the demodulator 620 to perform hopping of the channel equipped with a corresponding service stream. The channel manager is able to use network- and service- information decoded by the service-information decoder 640 to select a channel and a service.

The service manager controls A/V data contained in the service stream to be outputted, such that it can provide the service, and performs the application such that data contained in the service stream is outputted.

The service-information decoder 640 decodes the service table information stored in the service information buffer 635, and stores service information contained in the service table information in the service-information storage unit 650. If the service table information is contained in the first and second signaling signals from among the signal frame demodulated by the demodulator 620, the service-information decoder 640 receives and decodes the resultant service table information. For example, the service-information decoder 640 receives the service table information describing the network information from the first signaling signal. The service-information decoder 640 receives the service table information describing the service from the second signaling signal, and decodes the received service table information.

The data processor 670 de-packetizes the stream data packet stored in the stream buffer 637. The packet filter 671 contained in the data processor 670 filters packet having a desired packet identifier from among the stream data packet stored in the stream buffer 637, such that only the corresponding packet can be transmitted to the decoder 680. If the corresponding packet acts as a packet for transmitting data, the data handler 673 of the data processor 670 extracts data to be provided as the service, and the middleware engine 675 can transmit the output data of the data handler 673 to the application implementing the data broadcasting.

The post-processor 690 outputs OSD (On Screen Display) on which the user selects a control signal received from the interface unit 665. Then, the post-processor 690 performs post-processing of the output signal to output the audio/video/data broadcasting.

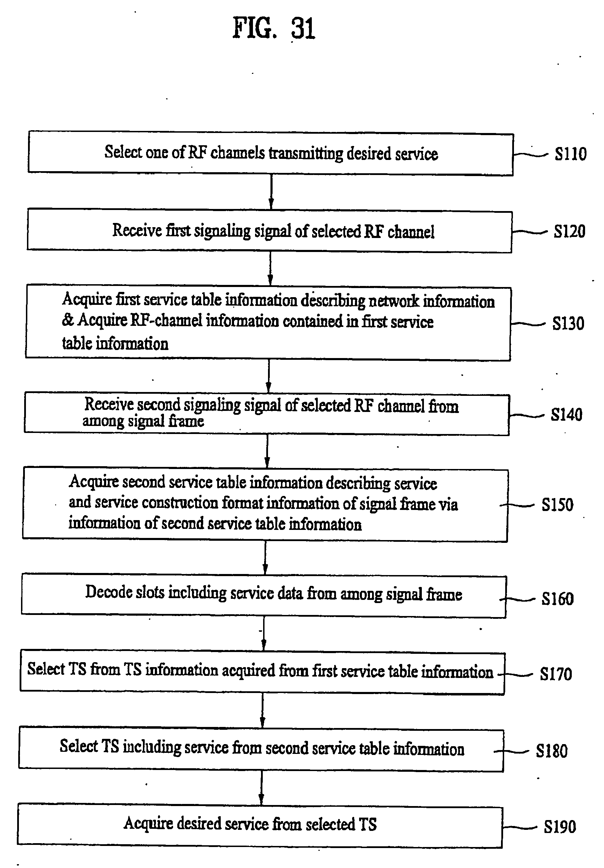

FIG. 31 is a flow chart illustrating a method for receiving a signal according to the present invention. Referring to FIG. 21, the signal reception apparatus selects any one of RF channels transmitting a desired service to acquire the service contained in the above signal frame at step S110.

The signal reception apparatus receives the first signaling signal of the selected RF channel at step S120, acquires specific information for describing network information from the first signaling signal, and acquires RF-channel information from the network information at step S130. In this case, the specific information describing the network information may be contained in the first service table information, and may be then transmitted.

The signal reception apparatus receives the second signaling signal of the selected RF channel from among the signal frame at step S140. The signal reception apparatus acquires the service description information, and also acquires service construction format information contained in the signal frame via the above service description information at step S150. The service description information may be contained in the second service table information, and may be then transmitted.

The above-mentioned apparatus decodes slots, each of which includes service data, from among the signal frame at step S160. The apparatus selects the transport stream (TS) using the TS information acquired from the network description information at step S170, and selects another TS stream including the service from the service description information at step S180.

The apparatus acquires a desired service from the selected TS stream at step S190. According to the method and apparatus for transmitting/receiving a signal according to the present invention, a transmission signal can be easily detected and recovered, and a signal transmission/reception performance of an overall transmission/reception system can be improved.

It will be apparent to those skilled in the art that various modifications and variations can be made in the present invention without departing from the scope of the invention. Thus, it is intended that the present invention covers the modifications and variations of this invention provided they come within the scope of the appended claims.

## Claims

1. An apparatus for an Orthogonal Frequency Division Multiplexing, OFDM, system, the apparatus comprising:
a receiver (210) for receiving a broadcasting signal, the broadcasting signal conveying a signal frame including physical layer pipes, PLPs, and a preamble, the preamble including a first pilot signal and a second pilot signal, wherein the first pilot signal has information about a fast Fourier transform, FFT, size of the second pilot signal and the second pilot signal has information for accessing the PLPs in the signal frame of the received broadcasting signal, and wherein the PLP is a physical layer channel which carries one or more services, the second pilot signal includes a service description table, SDT, and a network information table, NIT, the NIT includes a descriptor which is used in the Transport Stream, TS, loop of the NIT and the descriptor includes transmission mode information indicating at least one transmission mode of single-input-single-output, SISO, multi-input-single-output, MISO and multi-input-multi-output, MIMO;
a demodulator (220) for demodulating the received broadcasting signal in accordance with an OFDM scheme;
a frequency deinterleaver (241) for performing frequency deinterleaving of the demodulated broadcasting signal;
a parser (243) for extracting a PLP of the PLPs from the signal frame of the demodulated broadcasting signal by using the information included in the second pilot signal;
a demapper(247) for demapping symbols of the extracted PLP to bit data;
a Low density parity check scheme, LDPC, decoder (253) for performing a first error correction decoding of the demapped bit data based on an LDPC scheme;
a service information storage unit (650) configured to store the NIT;
a managing unit (660) configured to control the reception unit (210a, 210n) to select a channel by using the transmission mode information of the descriptor which is included in the Transport Stream, TS, loop of the stored NIT.

2. The apparatus according to claim 1, further comprising a time deinterleaver (245) for performing time deinterleaving of the PLP extracted by the parser (243).

3. The apparatus according to any one of the preceding claims, further comprising a Bose-Chaudhuri-Hocquenghem, BCH, decoder (257) for performing a second error correction decoding of the first error correction decoded bit data based on a BCH scheme.

4. The apparatus according to any one of the preceding claims, wherein the signal frame includes at least one RF band and at least one PLP on each RF band.

5. A method for an Orthogonal Frequency Division Multiplexing, OFDM, system, the method comprising:
receiving a broadcasting signal, the broadcasting signal conveying a signal frame including physical layer pipes, PLPs, and a preamble, the preamble including a first pilot signal and a second pilot signal, wherein the first pilot signal has information about a fast Fourier transform, FFT, size of the second pilot signal and the second pilot signal has information for accessing the PLPs in the signal frame of the received broadcasting signal and wherein the PLP is a physical layer channel which carries one or more services, the second pilot signal includes a service description table, SDT, and a network information table, NIT, the NIT includes a descriptor which is used in the Transport Stream, TS, loop of the NIT and the descriptor includes transmission mode information indicating at least one transmission mode of single-input-single-output, SISO, multi-input-single-output, MISO and multi-input-multi-output, MIMO;
demodulating the received broadcasting signal in accordance with an OFDM scheme;
frequency deinterleaving the demodulated broadcasting signal;
extracting a PLP of the PLPs from the signal frame of the demodulated broadcasting signal by using the information included in the second pilot signal;
demapping symbols of the extracted PLP to bit data;
a first error correction decoding the demapped bit data based on a low density parity check scheme, LDPC;
storing the NIT; and
controlling to select a channel by using the transmission mode information of the descriptor which is included in the Transport Stream, TS, loop of the stored NIT.

6. The method according to claim 5, further comprising performing time deinterleaving of the extracted PLP.

7. The method according to any one of claims 5 or 6, further comprising performing a second error correction decoding of the first error correction decoded bit data based on a Bose-Chaudhuri-Hocquenghem, BCH, scheme.

8. The method according to any one of claims 5 to 7, wherein the signal frame includes at least one RF band and at least one PLP on each RF band.

## Patentansprüche

1. Vorrichtung für ein orthogonales Frequenzmultiplex OFDM -System (Orthogonal Frequency Division Multiplexing System), umfassend:
einen Empfänger (210) zum Empfangen eines Rundfunksignals, welches ein Physical Layer Pipes PLPs und eine Präambel enthaltendes Signal-Frame überträgt, welche Präambel ein erstes Pilotsignal und ein zweites Pilotsignal enthält, wobei das erste Pilotsignal Information über eine Größe einer schnellen Fouriertransformation FFT des zweiten Pilotsignals aufweist, und das zweite Pilotsignal Information zum Zugriff auf die PLPs im Signal-Frame des empfangenen Rundfunksignals aufweist, und wobei der PLP ein Physical Layer Kanal ist, der einen oder mehrere Dienste trägt, das zweite Pilotsignal eine Dienstbeschreibungstabelle SDT und eine Netzwerkinformationstabelle NIT enthält, wobei die NIT einen Descriptor enthält, der im Transportstrom TS Loop der NIT benutzt wird, und der Descriptor Übertragungsmodusinformation enthält, die mindestens einen Sendemodus Single-Input-Single-Output SISO und/oder Multi-Input-Single-Output MISO und/oder Multi-Input-Multi-Output MIMO angibt;
einen Demodulator (220) zum Demodulieren des empfangenen Rundfunksignals gemäß eines OFDM Schemas;
einen Frequenz-Entschachteler (241) zum Durchführen von Frequenz-Entschachtelung des demodulierten Rundfunksignals;
einen Parser (243) zum Extrahieren eines PLP der PLPs aus dem Signal-Frame des demodulierten Rundfunksignals unter Verwendung der im zweiten Pilotsignal enthaltenen Information;
einen Demapper (247) zum Demappen von Symbolen des extrahierten PLPs in Bitdaten;
einen Low Density Parity Bit LDPC Schema Decodierer (253) zum Durchführen einer ersten Fehlerkorrektur-Decodierung der demappten Bitdaten auf Basis eines LDPC Schemas;
eine Dienstinformationsspeichereinheit (650), die zum Speichern der NIT konfiguriert ist;
eine Verwaltungseinheit (660), die zum Steuern der Empfangseinheit (210a, 210n) konfiguriert ist, um unter Verwendung der im Transportstrom TS Loop der gespeicherten NIT enthaltenen Übertragungsmodusinformation des Descriptors einen Kanal auszuwählen.

2. Vorrichtung nach Anspruch 1, ferner umfassend einen Zeit-Entschachteler (245) zum Durchführen von Zeit-Entschachtelung des vom Parser (243) extrahierten PLPs.

3. Vorrichtung nach einem der vorhergehenden Ansprüche, ferner umfassend einen Bose-Chaudhuri-Hocquenghem BCH Decodierer (257) zum Durchführen einer zweiten Fehlerkorrektur-Decodierung der mit der ersten Fehlerkorrektur decodierten Bitdaten auf Basis eines BCH Schemas.

4. Vorrichtung nach einem der vorhergehenden Ansprüche, wobei das Signal-Frame mindestens ein HF-Band und mindestens ein PLP in jedem HF-Band enthält.

5. Verfahren für ein orthogonales Frequenzmultiplex OFDM
- System (Orthogonal Frequency Division Multiplexing System), umfassend:
Empfangen eines Rundfunksignals, welches ein Physical Layer Pipes PLPs und eine Präambel enthaltendes Signal-Frame überträgt, welche Präambel ein erstes Pilotsignal und ein zweites Pilotsignal enthält, wobei das erste Pilotsignal Information über eine Größe einer schnellen Fouriertransformation FFT des zweiten Pilotsignals aufweist und das zweite Pilotsignal Information zum Zugriff auf die PLPs im Signal-Frame des empfangenen Rundfunksignals aufweist, und wobei der PLP ein Physical Layer Kanal ist, der einen oder mehrere Dienste trägt, das zweite Pilotsignal eine Dienstbeschreibungstabelle SDT und eine Netzwerkinformationstabelle NIT enthält, wobei die NIT einen Descriptor enthält, der im Transportstrom TS Loop der NIT benutzt wird, und der Descriptor Übertragungsmodusinformation enthält, die mindestens einen Sendemodus Single-Input-Single-Output SISO und/oder Multi-Input-Single-Output MISO und/oder Multi-Input-Multi-Output MIMO angibt;
Demodulieren des empfangenen Rundfunksignals gemäß eines OFDM Schemas;
Durchführen von Frequenzentschachtelung des demodulierten Rundfunksignals;
Extrahieren eines PLP der PLPs aus dem Signal-Frame des demodulierten Rundfunksignals unter Verwendung der im zweiten Pilotsignal enthaltenen Information;
Demappen von Symbolen des extrahierten PLPs in Bitdaten;
Durchführen einer ersten Fehlerkorrektur-Decodierung der entmappten Bitdaten auf Basis eines Low Density Parity Bit LDPC Schemas;
Speichern der NIT; und
Steuern zum Auswählen eines Kanals unter Verwendung der Übertragungsmodusinformation des Descriptors, welche in dem Transportstrom TS Loop der gespeicherten NIT enthalten ist.

6. Verfahren nach Anspruch 5, ferner umfassend das Durchführen von Zeit-Entschachtelung des extrahierten PLPs.

7. Verfahren nach einem der Ansprüche 5 oder 6, ferner umfassend das Durchführen der zweiten Fehlerkorrektur-Decodierung der decodierten Bitdaten der mit der ersten Fehlerkorrektur decodierten Bitdaten auf Basis eines Bose-Chaudhuri-Hocquenghem BCH Schemas.

8. Verfahren nach einem der Ansprüche 5 bis 7, wobei das Signal-Frame mindestens ein HF-Band und mindestens einen PLP in jedem HF-Band beinhaltet.

## Revendications

1. Appareil pour un système de multiplexage par répartition orthogonale de fréquence, OFDM ("Orthogonal Frequency Division Multiplexing"), l'appareil comprenant :
un récepteur (210) pour recevoir un signal de diffusion, le signal de diffusion transportant une trame de signal comprenant des conduits de couche physique, PLP ("Physical Layer Pipe"), et un préambule, le préambule comprenant un premier signal pilote et un deuxième signal pilote, dans lequel le premier signal pilote comprend des informations sur une taille de transformée de Fourier rapide, FFT ("Fast Fourier Transform"), du deuxième signal pilote et le deuxième signal pilote comprend des informations pour accéder aux PLP dans la trame de signal du signal de diffusion reçu, et dans lequel le PLP est un canal de couche physique qui porte un ou plusieurs services, le deuxième signal pilote comprend une table de description de services, SDT ("Service Description Table"), et une table d'informations de réseau, NIT ("Network Information Table"), la NIT comprend un descripteur qui est utilisé dans la boucle de flux de transport, TS ("Transport Stream"), de la NIT et le descripteur comprend des informations de mode de transmission indiquant au moins un mode de transmission parmi entrée unique-sortie unique, SISO (" Single Input-Single Output"), entrées multiples-sortie unique, MISO ("Multiple Input-Single Output"), et d'entrées multiples-sorties multiples, MIMO ("Multiple Input-Multiple Output");
un démodulateur (220) pour démoduler le signal de diffusion reçu selon un schéma OFDM;
un désentrelaceur en fréquence (241) pour exécuter un désentrelacement en fréquence du signal de diffusion démodulé;
un analyseur syntaxique (243) pour extraire un PLP parmi les PLP de la trame de signal du signal de diffusion démodulé en utilisant les informations incluses dans le deuxième signal pilote;
un démappeur (247) pour démapper des symboles du PLP extrait en données binaires;
un décodeur (253) à schéma de contrôle de parité de faible densité, LDPC ("Low-Density Parity-Check"), pour exécuter un premier décodage à correction d'erreurs des données binaires démappées sur la base d'un schéma LDPC;
une unité de stockage d'informations de service (650) configurée pour stocker la NIT;
une unité de gestion (660) configurée pour commander à l'unité de réception (210a, 210n) de sélectionner un canal en utilisant les informations de mode de transmission du descripteur qui sont incluses dans la boucle de flux de transport, TS, de la NIT stockée.

2. Appareil selon la revendication 1, comprenant en outre un désentrelaceur en temps (245) pour exécuter un désentrelacement en temps du PLP extrait par l'analyseur syntaxique (243).

3. Appareil selon l'une quelconque des revendications précédentes, comprenant en outre un décodeur Bose-Chaudhuri-Hocquenghem, BCH, (257) pour exécuter un deuxième décodage à correction d'erreurs des premières données binaires décodées avec correction d'erreurs sur la base d'un schéma BCH.

4. Appareil selon l'une quelconque des revendications précédentes, dans lequel la trame de signal comprend au moins une bande RF et au moins un PLP sur chaque bande RF.

5. Procédé pour un système de multiplexage par répartition de fréquence orthogonale, OFDM ("Orthogonal Frequency Division Multiplexing"), le procédé comprenant :
recevoir un signal de diffusion, le signal de diffusion transportant une trame de signal comprenant des conduits de couche physique, PLP ("Physical Layer Pipe"), et un préambule, le préambule comprenant un premier signal pilote et un deuxième signal pilote, dans lequel le premier signal pilote comprend des informations sur une taille de transformée de Fourier rapide, FFT ("Fast Fourier Transform"), du deuxième signal pilote et le deuxième signal pilote comprend des informations pour accéder aux PLP dans la trame de signal du signal de diffusion reçu, et dans lequel le PLP est un canal de couche physique qui porte un ou plusieurs services, le deuxième signal pilote comprend une table de description de services, SDT ("Service Description Table"), et une table d'informations de réseau, NIT ("Network Information Table"), la NIT comprend un descripteur qui est utilisé dans la boucle de flux de transport, TS ("Transport Stream"), de la NIT et le descripteur comprend des informations de mode de transmission indiquant au moins un mode de transmission parmi entrée unique-sortie unique, SISO ("Single Input-Single Output"), entrées multiples-sortie unique, MISO ("Multiple Input-Single Output"), et d'entrées multiples-sorties multiples, MIMO ("Multiple Input-Multiple Output");
démoduler le signal de diffusion reçu selon un schéma OFDM;
désentrelacer en fréquence le signal de diffusion démodulé;
extraire un PLP parmi les PLP de la trame de signal du signal de diffusion démodulé en utilisant les informations incluses dans le deuxième signal pilote;
démapper les symboles du PLP extrait en données binaires;
un premier décodage à correction d'erreurs des données binaires démappées sur la base d'un schéma de contrôle de parité de faible densité, LDPC ("Low-Density Parity-Check");
stocker la NIT; et
commander la sélection d'un canal en utilisant les informations de mode de transmission du descripteur qui sont incluses dans la boucle de flux de transport, TS, de la NIT stockée.

6. Procédé selon la revendication 5, comprenant en outre l'exécution d'un désentrelacement en temps du PLP extrait.

7. Procédé selon l'une quelconque des revendications 5 et 6, comprenant en outre l'exécution d'un deuxième décodage à correction d'erreurs des premières données binaires décodées avec correction d'erreurs sur la base d'un schéma Bose-Chaudhuri-Hocquenghem, BCH.

8. Procédé selon l'une quelconque des revendications 5 à 7, dans lequel la trame de signal comprend au moins une bande RF et au moins un PLP sur chaque bande RF.
